# EUROPEAN PATENT APPLICATION

(11) **EP 4 303 238 A1**
(43) Date of publication of application: **10.01.2024**
(21) Application number: 22763109.0
(22) Date of filing: 24.02.2022
(51) Int. Cl.: C08F 10/00, C08F 297/04, C08F 4/6592, C08F 210/16, C08L 23/08, C08L 23/18, C08L 53/02, C09K 3/10, C08J 5/18, F16F 1/36

(54) **THERMOPLASTIC ELASTOMER COMPOSITION**

(30) Priority: 05.03.2021 JP 2021035465
(71) Applicant: Mitsui Chemicals, Inc., Tokyo 104-0028 (JP)
(72) Inventor: YOSHIDA, Yuto, Sodegaura-shi, Chiba 299-0265 (JP); SUZUKI, Terufumi, Sodegaura-shi, Chiba 299-0265 (JP); ABE, Shota, Sodegaura-shi, Chiba 299-0265 (JP)
(74) Representative: Hoffmann Eitle
(86) International application number: PCT/JP2022/007687
(87) International publication number: WO 2022/186053

(57) **Abstract**

An aspect of the present invention is a thermoplastic elastomer composition including 100 parts by mass of a block copolymer containing a polymer block (X) having an aromatic vinyl compound as a main component and a polymer block (Y) having a conjugated diene compound as a main component, or a hydrogenated product thereof (A); 1 to 400 parts by mass of an ethylene/α-olefin copolymer (B) satisfying the following requirements (b-1) to (b-3); and 0 to 200 parts by mass of a polyolefin-based resin (C) satisfying the following requirement (c-1), (b-1) a kinematic viscosity at 100°C is 5 to 5,000 mm²/s and a kinematic viscosity at 40°C is 50 to 100,000 mm²/s, (b-2) a weight-average molecular weight (Mw) determined by gel permeation chromatography (GPC) is 1,000 to 30,000, (b-3) a content ratio of ethylene structural units is 15 to 85 mol%, and (c-1) MFR (230°C and 2.16 kg) is 0.1 to 500 g/10 min.

## Description

### Technical Field

An aspect of the present invention relates to a thermoplastic elastomer composition which is excellent in, for example, compression set and permanent elongation and includes an ethylene/α-olefin copolymer satisfying specific requirements, and a molded article obtained therefrom.

### Background Art

A thermoplastic elastomer (TPE) is used for various applications such as automobiles, home electrical appliances, food, medical care and daily commodities, as a material having both melt molding processability similar to that of a thermoplastic resin such as polyethylene (PE) or polypropylene (PP) and softness/rubber elasticity close to that of crosslinked rubber. There are various kinds of TPEs such as olefin-based elastomers (TPOs), styrene-based elastomers (TPSs), polyurethane-based elastomers (TPUs), polyamide-based elastomers (TPAs or TPAEs), polyester-based elastomers (TPCs or TPYs) and vinyl chloride-based elastomers (TPVCs) .

Among them, TPS is a compound having a styrene-based block copolymer (SBC) as a base resin. SBC is a generic name of block copolymers in which a hard segment as a constrained phase is composed of polystyrene. A soft segment is a conjugated diene polymer of, for example, butadiene or isoprene, or a hydrogen-added (hydrogenated) product thereof. In SBC, the soft segment and the hard segment have a microphase-separated structure at normal temperature, and thus the hard segment provides a physical crosslinking point, so that performance as an elastomer (softness and rubber elasticity) is exhibited without chemical crosslinking. Also, the physical crosslinking point composed of a polystyrene block can be melted and de-crosslinked at a temperature equal to or higher than a glass transition point thereof, and therefore unlike common crosslinked rubber, SBC has thermoplasticity, and can be melt-molded. Among SBCs, SBC in which a soft segment such as a polybutadiene block or a polyisoprene block is hydrogenated (HSBC) has no double bond in the molecule, thus exhibits better heat resistance and weather resistance over non-hydrogenated SBC, and therefore is widely used as a TPS raw material.

TPS contains, in addition to SBC, a softener such as mineral oil, a thermoplastic resin such as polypropylene and a tackifier such as petroleum resin, for example, according to a purpose. Among them, a softener is a compounding agent that is important for improving the softness/rubber elasticity of TPS and fluidity (moldability) during melting, and, for example, paraffin-based mineral oil is generally used.

Patent Literature 1 discloses a composition obtained by blending mineral oil and polypropylene with a hydrogenated styrene-isoprene-styrene block copolymer, a hydrogenated styrene-(butadiene-isoprene)-styrene block copolymer or a hydrogenated styrene-butadiene-styrene block copolymer.

### Citation List

### Patent Literature

Patent Literature 1: JP-A H11-106565

### Summary of Invention

### Technical Problem

However, in Patent Literature 1, there is a problem that sag resistance such as compression set and permanent elongation is not sufficient if paraffin-based mineral oil is used as a softener for TPS. This problem is particularly noticeable if SBC having a weight-average molecular weight of about 100,000 is used with importance placed on the fluidity (moldability) of TPS.

In view of the above-described problem, an object of the present invention is to provide a thermoplastic elastomer composition excellent in fluidity, softness, and sag resistance such as compression set and permanent elongation, and a molded article formed from the composition.

### Solution to Problem

The present inventors have conducted intensive studies for solving the above-described problem, and resultantly found that a thermoplastic elastomer composition excellent in balance of fluidity, softness and sag resistance such as compression set and permanent elongation can be obtained by using a specific ethylene/α-olefin copolymer (B).

That is, an example of an aspect of the present invention relates to the following [1] to [11].
[1] A thermoplastic elastomer composition including:
   100 parts by mass of a block copolymer containing a polymer block (X) having an aromatic vinyl compound as a main component and a polymer block (Y) having a conjugated diene compound as a main component, or a hydrogenated product thereof (A);
   1 to 400 parts by mass of an ethylene/α-olefin copolymer (B) satisfying the following requirements (b-1) to (b-3); and
   0 to 200 parts by mass of a polyolefin-based resin (C) satisfying the following requirement (c-1),
   (b-1) a kinematic viscosity at 100°C is 5 to 5,000 mm²/s and a kinematic viscosity at 40°C is 50 to 100,000 mm²/s,
   (b-2) a weight-average molecular weight (Mw) determined by gel permeation chromatography (GPC) is 1,000 to 30,000,
   (b-3) a content ratio of ethylene structural units is 15 to 85 mol%, and
   (c-1) MFR (230°C and 2.16 kg) is 0.1 to 500 g/10 min.
[2] The thermoplastic elastomer composition according to [1], wherein the block copolymer or hydrogenated product thereof (A) is a hydrogenated product of a block copolymer containing a polymer block (X) having an aromatic vinyl compound as a main component and a polymer block (Y) having a conjugated diene compound as a main component, and
   a content of the ethylene/α-olefin copolymer (B) is 30 to 300 parts by mass and a content of the polyolefin-based resin (C) is 10 to 150 parts by mass per 100 parts by mass of the hydrogenated product of the block copolymer.
[3] The thermoplastic elastomer composition according to [1] or [2], wherein the kinematic viscosity at 100°C is 30 to 300 mm²/s and the kinematic viscosity at 40°C is 300 to 4,000 mm²/s in the requirement (b-1),
   the weight-average molecular weight (Mw) determined by gel permeation chromatography (GPC) is 2,000 to 7,000 in the requirement (b-2), and
   the content ratio of ethylene structural units is 40 to 60 mol% in the requirement (b-3).
[4] The thermoplastic elastomer composition according to any one of [1] to [3], wherein the polymer block (X) is a polymer block having styrene as a main component, the polymer block (Y) is a copolymer block having butadiene and isoprene as main components, and the block copolymer or hydrogenated product thereof (A) is a hydrogenated product of the block copolymer.
[5] A seal material including the thermoplastic elastomer composition according to any one of [1] to [4].
[6] An automobile interior material including the thermoplastic elastomer composition according to any one of [1] to [4].
[7] A damping material including the thermoplastic elastomer composition according to any one of [1] to [4].
[8] A method for producing a thermoplastic elastomer composition, including a step of mixing:
   100 parts by mass of a block copolymer containing a polymer block (X) having an aromatic vinyl compound as a main component and a polymer block (Y) having a conjugated diene compound as a main component, or a hydrogenated product thereof (A);
   1 to 400 parts by mass of an ethylene/α-olefin copolymer (B) produced by the following method (α) and satisfying the following requirements (b-1) to (b-3); and
   0 to 200 parts by mass of a polyolefin-based resin (C) satisfying the following requirement (c-1),
   (b-1) a kinematic viscosity at 100°C is 5 to 5,000 mm²/s and a kinematic viscosity at 40°C is 50 to 100,000 mm²/s,
   (b-2) a weight-average molecular weight (Mw) determined by gel permeation chromatography (GPC) is 1,000 to 30,000, and
   (b-3) a content ratio of ethylene structural units is 15 to 85 mol%,
   (c-1) MFR (230°C and 2.16 kg) is 0.1 to 500 g/10 min, and
   the method (α): a method including a step of polymerizing ethylene and an α-olefin by solution polymerization in the presence of a catalyst system including:
      a bridged metallocene compound (P-1) represented by the following formula [1], and
      at least one compound (Q) selected from the group consisting of an organometal compound (Q-1), an organoaluminum oxy compound (Q-2) and a compound (Q-3) that reacts with the bridged metallocene compound (P-1) to form an ion pair: 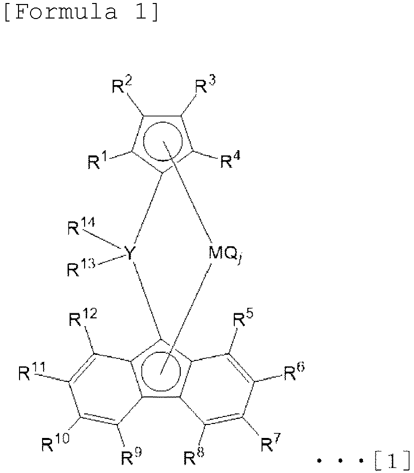
      [in the formula [1], R¹, R², R³, R⁴, R⁵, R⁸, R⁹ and R¹² are each independently a hydrogen atom, a hydrocarbon group, or a silicon-containing hydrocarbon group, and a plurality of adjacent groups are optionally linked to each other to form a ring structure;
      R⁶ and R¹¹ are the same group and are a hydrogen atom, a hydrocarbon group, or a silicon-containing hydrocarbon group;
      R⁷ and R¹⁰ are the same group and are a hydrogen atom, a hydrocarbon group, or a silicon-containing hydrocarbon group;
      R⁶ and R⁷ are optionally bonded to a hydrocarbon having 2 to 3 carbon atoms to form a ring structure;
      R¹⁰ and R¹¹ are optionally bonded to a hydrocarbon having 2 to 3 carbon atoms to form a ring structure;
      R⁶, R⁷, R¹⁰, and R¹¹ are not hydrogen atoms at the same time;
      Y is a carbon atom or a silicon atom;
      R¹³ and R¹⁴ are each independently a hydrogen atom, a hydrocarbon group, or a silicon-containing hydrocarbon group, and are optionally linked to each other to form a ring structure;
      M is Ti, Zr, or Hf;
      Q is independently a halogen atom, a hydrocarbon group, an anionic ligand, or a neutral ligand capable of coordinating to a lone pair of electrons; and
      j is an integer of 1 to 4].
[9] The production method according to [8], wherein in the formula [1], one or both of R¹³ and R¹⁴ are aryl groups.
[10] The production method according to [8] or [9], wherein in the formula [1], both R¹³ and R¹⁴ are aryl groups, and one of R² and R³ is a saturated hydrocarbon group having 4 carbon atoms.
[11] The production method according to any one of [8] to [10], wherein the polymer block (X) is a polymer block having styrene as a main component, the polymer block (Y) is a copolymer block having butadiene and isoprene as main components, and the block copolymer or hydrogenated product thereof (A) is a hydrogenated product of the block copolymer.

### Advantageous Effect of Invention

According to an aspect of the present invention, it is possible to provide a thermoplastic elastomer composition excellent in balance of, fluidity, softness and sag resistance such as compression set and permanent elongation.

### Description of Embodiments

The present invention will be described in detail below. In the present specification, the term "to" which indicates a numerical range, in, for example, "M to N", means being "equal to or greater than M and equal to or less than N" unless otherwise specified.

In the present specification, the term "constituent unit derived from M" may be used when an olefin forming a certain polymer is M, and this means a "constituent unit corresponding to M", that is, a constituent unit having a pair of bonds formed by cleavage of a pi bond forming a double bond of M.

In the present specification, the term "((meth)acryl" is used as a concept which encompasses acryl, methacryl, and both acryl and methacryl.

A thermoplastic elastomer composition according to an aspect of the present invention includes a block copolymer or a hydrogenated product thereof (A) shown below, an ethylene/α-olefin copolymer (B) shown below, and a polyolefin-based resin (C) shown below.

[Block copolymer containing a polymer block (X) having an aromatic vinyl compound as a main component and a polymer block (Y) having a conjugated diene compound as a main component, or hydrogenated product thereof (A)]

The component (A) of a thermoplastic elastomer composition according to an aspect of the present invention is a block copolymer containing a polymer block (X) having an aromatic vinyl compound as a main component and a polymer block (Y) having a conjugated diene compound as a main component, or a hydrogenated product thereof. The block copolymer includes a polymer block (X) having an aromatic vinyl compound as a main component and a polymer block (Y) having a conjugated diene compound as a main component, and is also referred to as an "X/Y block copolymer" hereinafter.

Specific examples of the aromatic vinyl compound forming the polymer block (X) include styrene, α-methylstyrene, 2-methylstyrene, 3-methylstyrene, 4-methylstyrene, 1,3-dimethylstyrene, 4-tert-butylstyrene, 1-vinylnaphthalene, 2-vinylnaphthalene, 4-propylstyrene, 4-iso-propylstyrene, 4-cyclohexylstyrene, 4-dodecylstyrene, 2-ethyl-4-benzylstyrene, 4-(phenylbutyl)styrene, monochlorostyrene, dichlorostyrene, methoxystyrene, and vinyl anthracene, and one or more of these aromatic vinyl compounds can be used. Among them, styrene is most preferable.

The conjugated diene compound forming the polymer block (Y) is preferably a conjugated diene having 4 to 20 carbon atoms, specific examples thereof include 1,3-butadiene, isoprene(2-methyl-1,3-butadiene), 2,3-dimethyl-1,3-butadiene, 1,3-pentadiene, and 1,3-hexadiene, and one or more of these conjugated diene compounds can be used. Among them, butadiene and isoprene are most preferable.

The X/Y block copolymer containing a polymer block (X) and a polymer block (Y) has a weight-average molecular weight (Mw) of preferably 30,000 to 500,000, more preferably 50,000 to 400,000, still more preferably 80,000 to 300,000, particularly preferably 80,000 to 200,000 in terms of polystyrene as measured by GPC. When the weight-average molecular weight of the X/Y block copolymer is 30,000 or more, the sag resistance, such as compression set and permanent elongation, of a molded product obtained from the thermoplastic elastomer composition is improved, and when the weight-average molecular weight is 500,000 or less, the composition has good moldability and processability.

The ratio between the polymer block (X) and the polymer block (Y) in the X/Y block copolymer depends on, for example, the number average molecular weight of the X/Y block copolymer and the number average molecular weights of the polymer block (X) and the polymer block (Y). In general, the ratio of the polymer block (X) is preferably 5 to 80 mass% with the ratio of the polymer block (Y) being 20 to 95 mass%, more preferably 10 to 75 mass% with the ratio of the polymer block (Y) being 25 to 90 mass%, still more preferably 20 to 40 mass% with the ratio of the polymer block (Y) being 60 to 80 mass%, based on the mass of the X/Y block copolymer. When the ratio of the polymer block (X) is 5 mass% or more (that is, the ratio of the polymer block (Y) is 95 mass% or less) in the X/Y block copolymer, the thermoplastic elastomer composition including an X/Y block copolymer and a molded product obtained therefrom have good sag resistance such as good compression set and permanent elongation, and when the ratio of the polymer block (X) is 80 mass% or less (that is, the ratio of the polymer block (Y) is 20 mass% or more), the composition does not have an excessively high melt viscosity, and has good moldability and processability.

The X/Y block copolymer may be linear, or branched into two or more branches, and is only required to have at least one polymer block (X) and at least one polymer block (Y) in a molecule, and there is no particular limitation on the structure thereof. A tri-block structure of X-Y-X type is particularly preferable in view of balance of mechanical properties, heat resistance and processability.

Specific examples thereof include styrene-butadiene-styrene block copolymers, styrene-isoprene-styrene block copolymers, and styrene-butadiene/isoprene-styrene block copolymers. For example, the styrene-butadiene-styrene block copolymer means a block copolymer in the form of polystyrene block-polybutadiene block-polystyrene block.

The method for producing the X/Y block copolymer is not particularly limited, and the X/Y block copolymer can be produced by, for example, sequentially polymerizing an aromatic vinyl compound such as styrene and a conjugated diene compound such as isoprene or butadiene in an inert solvent using a known method such as ion polymerization such as anion polymerization or cation polymerization, radical polymerization or coordination polymerization.

In the case of production by anion polymerization, mention is made of, for example, a method in which an aromatic vinyl compound and a conjugated diene compound are sequentially polymerized in an inert organic solvent such as n-hexane or cyclohexane using, for example, an aliphatic hydrocarbon alkali metal compound, an aromatic hydrocarbon alkali metal compound or an organic amino alkali metal compound as a polymerization initiator.

Among an aliphatic hydrocarbon alkali metal compound, an aromatic hydrocarbon alkali metal compound and an organic amino alkali metal compound, an aliphatic hydrocarbon lithium metal compound or an aromatic hydrocarbon lithium metal compound is preferable as a polymerization initiator. Specific examples thereof include methyllithium, ethyllithium, n-propyllithium, iso-propyllithium, n-butyllithium, sec-butyllithium, tert-butyllithium, n-hexyllithium, reaction products of diisopropenylbenzene and sec-butyllithium, and reaction products of divinylbenzene, sec-butyllithium and a small amount of 1,3-butadiene, and in particular, n-butyllithium and sec-butyllithium are preferable.

For the purpose of adjusting the vinyl bond ratio (ratio of 1,2- or 1,3-bond) in the conjugated diene compound and the molecular weight distribution of the copolymer, for example, an ether compound or a tertiary amine compound may be added. Examples of the ether compound include dimethyl ether, diethyl ether, diphenyl ether, tetrahydrofuran, and 1,4-dioxane, and examples of the tertiary amine compound include trimethylamine, triethylamine, tributylamine, N,N-dimethylaniline, N-methylpiperidine, N-methylpyrrolidine, N,N,N',N'-tetramethylethylenediamine, and N-methylmorpholine.

In the case of production by cation polymerization, mention is made of, for example, a method in which an aromatic vinyl compound and a conjugated diene compound are sequentially polymerized in an inert organic solvent such as n-hexane or cyclohexane using, as a polymerization initiator, a Lewis acid and an organic compound which generates a cation polymerization-active species with the aid of the Lewis acid.

Examples of the Lewis acid include titanium tetrachloride, tin tetrachloride, boron trichloride, and aluminum chloride, and examples of the organic compound include organic compounds having a functional group such as an alkoxy group, an acyloxy group or a halogen, for example, bis(2-methoxy-2-propyl)benzene, bis(2-acetoxy-2-propyl)benzene, and bis(2-chloro-2-propyl)benzene. Further, for example, amides such as N,N-dimethylacetamide and esters such as ethyl acetate may be used as a third component if necessary, together with the above-described Lewis acid and organic compound.

Examples of the inert organic solvent used during polymerization include saturated hydrocarbon-based solvents such as pentane, hexane, heptane, octane, cyclopentane, methylcyclopentane, cyclohexane and methylcyclohexane, and chlorine-based solvents such as methyl chloride and methylene chloride, and one or more thereof can be used.

The tri-block copolymer of X-Y-X type which is a particularly preferable form, as the component (A) used in an aspect of the present invention, can be produced by, for example, (1) a method in which using the compound functioning as a polymerization initiator for the anion polymerization, the cation polymerization or the radical polymerization, an aromatic vinyl compound is polymerized to form a polymer block (X), a conjugated diene compound is then added to the reaction system and subjected to polymerization to form a polymer block (Y), and if necessary, the aromatic vinyl compound is further added and subjected to polymerization to form the polymer block (X), or (2) a method in which using the compound functioning as a polymerization initiator for the anion polymerization, the cation polymerization or the radical polymerization, a conjugated diene compound having two polymerization-active functional groups is polymerized to form a polymer block (Y), and an aromatic vinyl compound is then added to the reaction system and subjected to polymerization to form a polymer block (X).

As the component (A) according to an aspect of the present invention, a hydrogenated product of the X/Y block copolymer can also be used. It is preferable to use the hydrogenated product because hydrogenation reduces the number of aliphatic double bonds in the X/Y block copolymer to improve heat resistance and weather resistance, and compatibility with the ethylene/α-olefin copolymer (B) that is a softener.

As the hydrogenated product of the X/Y block copolymer used as the component (A) according to an aspect of the present invention, a hydrogenated product in which 90 to 100% of aliphatic double bonds of the X/Y block copolymer are hydrogenated and 10% or less of aromatic double bonds are hydrogenated is suitable, and in particular, a hydrogenated product in which 99 to 100% of aliphatic double bonds are hydrogenated and 5% or less of aromatic double bonds are hydrogenated is preferable. In such a hydrogenated product of the X/Y block copolymer, the polymer block (Y) in which aliphatic double bonds are hydrogenated is substantially a block of polyolefin structure.

Examples of the hydrogenated product of the X/Y block copolymer include styrene-(ethylene/butene)-styrene copolymers, styrene-(ethylene/propylene)-styrene copolymers, and styrene-(ethylene/ethylene/propylene)-styrene copolymers. In particular, the hydrogenated product of the X/Y block copolymer is preferably a hydrogenated product of a block copolymer containing a polymer block having styrene as a main component and a copolymer block having butadiene and isoprene as main components.

For hydrogenation of the X/Y block copolymer, a known method can be employed, and the hydrogenated product can be obtained by, for example, reacting the X/Y block copolymer under appropriate temperature and pressure conditions in the presence of a hydrogenation catalysts and hydrogen.

Examples of the hydrogenation catalyst include (1) supported heterogeneous hydrogenation catalyst in which a metal such as Ni, Pt, Pd or Ru is supported on, for example, carbon, silica, alumina or diatomaceous earth, (2) so called Ziegler hydrogenation catalysts using a transition metal salt such as an organic acid salt or acetylacetone salt of, for example, Ni, Co, Fe or Cr and a reducing agent such as organoaluminum, and (3) homogeneous hydrogenation catalysts such as so called organometallic complexes such as organometallic compounds of, for example, Ti, Ru, Rh and Zr. The hydrogenation reaction is carried out in a temperature range of 0 to 200°C, more preferably 30 to 150°C. It is recommended that the pressure of hydrogen used in the hydrogenation reaction be 0.1 to 15 MPa, preferably 0.2 to 10 MPa, more preferably 0.3 to 7 MPa. The hydrogenation reaction time is 3 minutes to 10 hours, preferably 10 minutes to 5 hours. For the hydrogenation reaction, any of a batch process, a continuous process and a combination thereof can be used.

As the X/Y block copolymer used as the component (A) according to an aspect of the present invention, two or more X/Y block copolymers different in properties such as a molecular weight and a styrene content may be used in combination.

The X/Y block copolymer used as the component (A) according to an aspect of the present invention is commercially available, and a commercially available product can be used. Examples of the non-hydrogenated product include "D Series" manufactured by KRATON Corporation, "TR Series" manufactured by JSR Corporation, and "Tufprene" and "Asaprene" manufactured by ASAHI KASEI CORPORATION. Examples of the hydrogenated product include "SEPTON" and "HYBRAR" manufactured by KURARAY CO., LTD, "Tuftec" manufactured by ASAHI KASEI CORPORATION, "DYNARON" manufactured by JSR Corporation, and "G Series" manufactured by KRATON Corporation.

### [Ethylene/α-olefin copolymer (B)]

The ethylene/α-olefin copolymer (B) according to an aspect of the present invention satisfies the following requirements (b-1) to (b-3).

Requirement (b-1) The kinematic viscosity at 100°C is 5 to 5,000 mm²/s and a kinematic viscosity at 40°C is 50 to 100,000 mm²/s.

The kinematic viscosity of the ethylene/α-olefin copolymer (B) according to an aspect of the present invention at 100°C is 5 to 5,000 mm²/s, preferably 10 to 3,000 mm²/s, more preferably 15 to 1,000 mm²/s, still more preferably 15 to 500 mm²/s, particularly preferably 30 to 300 mm²/s.

The kinematic viscosity of the ethylene/α-olefin copolymer (B) according to an aspect of the present invention at 40°C is 50 to 100,000 mm²/s, preferably 100 to 50,000 mm²/s, more preferably 130 to 15,000 mm²/s, still more preferably 130 to 8,000 mm²/s, particularly preferably 300 to 4,000 mm²/s.

When the kinetic viscosity at 100°C and the kinetic viscosity at 40°C are in the above-described range, the balance between handleability during mixing with the X/Y block copolymer (A) or the polyolefin-based resin (C) and the compression set or permanent elongation of the thermoplastic elastomer composition is extremely improved.

Requirement (b-2) The weight-average molecular weight (Mw) determined by gel permeation chromatography (GPC) is in a range of 1,000 to 30,000.

Mw of the ethylene/α-olefin copolymer (B) according to an aspect of the present invention is 1,000 to 30,000, preferably 1,000 to 16,000, more preferably 1,300 to 10,000, still more preferably 1,500 to 8,000, particularly preferably 2,000 to 7,000.

When the weight-average molecular weight (Mw) determined by gel permeation chromatography (GPC) is in the above-described range, the balance between handleability during mixing with the X/Y block copolymer (A) or the polyolefin-based resin (C) and the compression set or permanent elongation of the thermoplastic elastomer composition is extremely improved.

Requirement (b-3) The content ratio of ethylene structural units is 15 to 85 mol%, and
The content ratio of the ethylene structural units is 15 to 85 mol%, preferably 20 to 80 mol%, more preferably 30 to 70 mol%, still more preferably 40 to 60 mol%.

If the ethylene content is excessively large or excessively small, crystallinity may increase, resulting in impairment of handleability during mixing with the X/Y block copolymer (A) and the polyolefin-based resin (C), or deterioration of the softness and low-temperature properties of the thermoplastic elastomer composition. If the ethylene content is excessively large or excessively small, compatibility with the X/Y block copolymer (A), in particular, compatibility with the Y block of the X/Y block copolymer (A) may be deteriorated, resulting in bleeding-out of the ethylene/α-olefin copolymer (B) from the thermoplastic elastomer composition, or impairment of compression set and permanent elongation.

The ethylene content in the ethylene/α-olefin copolymer (B) can be measured by a ¹³C-NMR method, and each peak can be identified and quantitated by, for example, a method described below and a method described in "Kobunshi Bunseki Handbook (Polymer Analysis Handbook)" (published from Asakura Publishing Co., Ltd., pp. 163-170).

Examples of the α-olefin forming the ethylene/α-olefin copolymer (B) according to an aspect of the present invention include α-olefins having 3 or more carbon atoms, and typical examples thereof include α-olefins having 3 to 20 carbon atoms, such as propylene, 1-butene, 1-pentene, 1-hexene, 1-heptene, 1-octene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. These α-olefins may be used alone, or used in combination of two or more thereof.

Among these α-olefins, α-olefins having 3 to 10 carbon atoms are preferable, propylene and 1-butene are more preferable, and propylene is still more preferable, from the viewpoint that crystallinity can be effectively reduced to obtain a liquid copolymer, excellent compatibility with the X/Y block copolymer (A) is obtained, and it is possible to obtain a composition and a molded article that exhibit the desired effects.

It is also possible to proceed with the polymerization with the reaction system also including at least one other monomer selected from a polar group-containing monomer, an aromatic vinyl compound and a cyclic olefin. The other monomer can be used in an amount of, for example, 20 parts by mass or less, preferably 10 parts by mass or less per 100 parts by mass in total of ethylene and an α-olefin having 3 to 20 carbon atoms.

Examples of the polar group-containing monomer include α,β-unsaturated carboxylic acids such as acrylic acid, methacrylic acid, fumaric acid and maleic anhydride, metal salts such as sodium salts thereof, α,β-unsaturated carboxylic acid esters such as methyl acrylate, ethyl acrylate, n-propyl acrylate, methyl methacrylate and ethyl methacrylate, vinyl esters such as vinyl acetate and vinyl propionate, and unsaturated glycidyls such as glycidyl acrylate and glycidyl methacrylate.

Examples of the aromatic vinyl compound include styrene, o-methylstyrene, m-methylstyrene, p-methylstyrene, o,p-dimethylstyrene, methoxystyrene, vinylbenzoic acid, methyl vinylbenzoate, vinylbenzyl acetate, hydroxystyrene, p-chlorostyrene, divinylbenzene, α-methylstyrene, and allylbenzene.

Examples of the cyclic olefin include cyclic olefins having 3 to 30, preferably 3 to 20 carbon atoms such as cyclopentene, cycloheptene, norbornene, 5-methyl-2-norbornene, 5-ethylidene-2-norbornene, 5-vinyl-2-norbornene and tetracyclododecene.

It is considered that the characteristics of a thermoplastic elastomer composition according to an aspect of the present invention can be explained in terms of the chemical structures of the X/Y block copolymer (A) and the ethylene/α-olefin copolymer (B).

A mineral oil-based softener that is commonly used, such as process oil, softens both the block X and the block Y of the X/Y block copolymer (A), whereas the ethylene/α-olefin copolymer (B) can selectively soften only the block Y of the X/Y block copolymer (A). Thus, it is considered that, as compared to a mineral oil-based softener, the ethylene/α-olefin copolymer (B) may be capable of more firmly holding the block X providing a physical crosslinking point of the X/Y block copolymer (A), resulting in exhibition of an effect of being excellent in mechanical properties such as compression set and permanent elongation.

The method for producing the ethylene/α-olefin copolymer (B) in an aspect of the present invention is not particularly limited, and examples thereof include a method using a vanadium catalyst including a vanadium compound and an organoaluminum compound as described in Patent Literature JP-B H02-1163 and Patent Literature JP-B H02-7998. Further, as a method for producing a copolymer with high polymerization activity, a method using a catalytic system including a metallocene compound such as zirconocene and an organoaluminumoxy compound (aluminoxane) as described in Patent Literature JP-A S61-221207, JP-B H07-121969, and JP2796376B may be used, and is more preferable because the chlorine content of the resulting copolymer and the 2,1-insertion of α-olefin can be reduced. In the method using a vanadium catalyst, a very small amount of chlorine may remain in the resulting ethylene/α-olefin copolymer (B) because a larger amount of a chlorine compound is used for the cocatalyst as compared to the method using a metallocene catalyst.

Reduction of 2,1-insertion of α-olefin enables the ethylene chain in the copolymer molecule to be further reduced, so that the intramolecular crystallinity of ethylene can be suppressed, and therefore it is possible to obtain an ethylene/α-olefin copolymer (B) having good compatibility with the X/Y block copolymer (A). The amount of 2,1-insertion of α-olefin is determined by analysis in ¹³C-NMR measurement in accordance with a method described in Patent Literature JP-A H7-145212, and is preferably less than 1%, more preferably 0 to 0.5%, still more preferably 0 to 0.1%. An ethylene/α-olefin copolymer in which a peak is not observed in a range of 15.0 to 17.5 ppm is particularly preferable.

An ethylene/α-olefin copolymer (B) favorable in balance performance among, for example, molecular weight control, molecular weight distribution and non-crystallinity is obtained particularly by using the following method.

The ethylene/α-olefin copolymer (B) according to an aspect of the present invention can be produced by copolymerizing ethylene and an α-olefin having 3 to 20 carbon atoms in the presence of an olefin polymerization catalyst including a bridged metallocene compound (P) represented by the following general formula [I], and at least one compound (Q) selected from the group consisting of an organometal compound (Q-1), an organoaluminum oxy compound (Q-2), and a compound (Q-3) that reacts with the bridged metallocene compound (P) to form an ion pair.

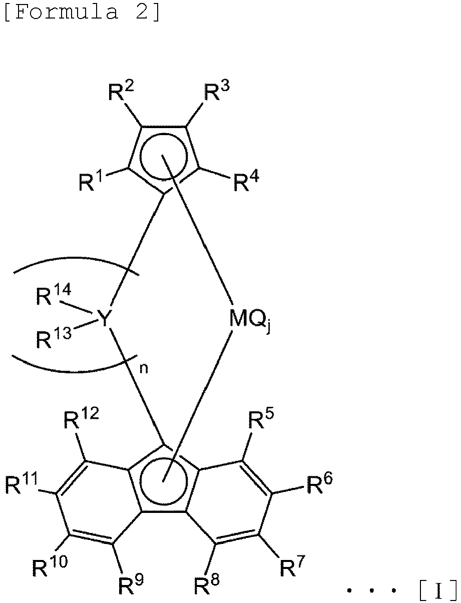

### [Bridged metallocene compound (P)]

The bridged metallocene compound (P) is represented by the above formula [I] . Y, M, R¹ to R¹⁴, Q, n and j in the formula [I] are described below.
(Y, M, R¹ to R¹⁴, Q, n and j)

Y is a Group XIV atom, is, for example, a carbon atom, a silicon atom, a germanium atom and a tin atom, and is preferably a carbon atom or a silicon atom, more preferably a carbon atom.

M is a titanium atom, a zirconium atom or a hafnium atom, preferably a zirconium atom.

R¹ to R¹² are each an atom or a substituent selected from the group consisting of a hydrogen atom, a hydrocarbon group having 1 to 20 carbon atoms, a silicon-containing group, a nitrogen-containing group, an oxygen-containing group, a halogen atom and a halogen-containing group, and are optionally the same as or different from one another. Adjacent substituents in R¹ to R¹² are optionally bonded to each other to form a ring, or are not optionally bonded to each other.

Examples of the hydrocarbon group having 1 to 20 carbon atoms include alkyl groups having 1 to 20 carbon atoms, cyclic saturated hydrocarbon groups having 3 to 20 carbon atoms, linear unsaturated hydrocarbon groups having 2 to 20 carbon atoms, cyclic unsaturated hydrocarbon groups having 3 to 20 carbon atoms, alkylene groups having 1 to 20 carbon atoms and arylene groups having 6 to 20 carbon atoms.

Examples of the alkyl groups having 1 to 20 carbon atoms include straight saturated hydrocarbon groups such as a methyl group, an ethyl group, a n-propyl group, an allyl group, a n-butyl group, a n-pentyl group, a n-hexyl group, a n-heptyl group, a n-octyl group, a n-nonyl group and a n-decanyl group, and branched saturated hydrocarbon groups such as an isopropyl group, an isobutyl group, a s-butyl group, a t-butyl group, a t-amyl group, a neopentyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, a 1-methyl-1-isopropyl-2-methylpropyl group and a cyclopropylmethyl group. The number of carbon atoms in such an alkyl group is preferably 1 to 6.

Examples of the cyclic saturated hydrocarbon groups having 3 to 20 carbon atoms include cyclic saturated hydrocarbon groups such as a cyclopropyl group, a cyclobutyl group, a cyclopentyl group, a cyclohexyl group, a cycloheptyl group, a cyclooctyl group, a norbornenyl group, a 1-adamantyl group and a 2-adamantyl group, and cyclic saturated hydrocarbon groups in which any hydrogen atom is replaced with a hydrocarbon group having 1 to 17 carbon atoms, such as a 3-methylcyclopentyl group, a 3-methylcyclohexyl group, a 4-methylcyclohexyl group, a 4-cyclohexylcyclohexyl group and a 4-phenylcyclohexyl group. The number of carbon atoms in such a cyclic saturated hydrocarbon group is preferably 5 to 11.

Examples of the linear unsaturated hydrocarbon groups having 2 to 20 carbon atoms include alkenyl groups such as an ethenyl group (vinyl group), a 1-propenyl group, a 2-propenyl group (allyl group) and a 1-methylethenyl group (isopropenyl group), and alkynyl groups such as an ethynyl group, a 1-propynyl group and a 2-propynyl group (propargyl group). The number of carbon atoms in such a linear unsaturated hydrocarbon group is preferably 2 to 4.

Examples of the cyclic unsaturated hydrocarbon groups having 3 to 20 carbon atoms include cyclic unsaturated hydrocarbon groups such as a cyclopentadienyl group, a norbornyl group, a phenyl group, a naphthyl group, an indenyl group, an azulenyl group, a phenanthryl group and an anthracenyl group, cyclic unsaturated hydrocarbon groups in which any hydrogen atom is replaced with a hydrocarbon group having 1 to 15 carbon atoms, such as a 3-methylphenyl group (m-tolyl group), a 4-methylphenyl group (p-tolyl group), a 4-ethylphenyl group, a 4-t-butylphenyl group, a 4-cyclohexylphenyl group, a biphenylyl group, a 3,4-dimethylphenyl group, a 3,5-dimethylphenyl group and a 2,4,6-trimethylphenyl group (mesityl group), and straight hydrocarbon groups or branched saturated hydrocarbon groups in which any hydrogen atom is replaced with a cyclic saturated hydrocarbon group or cyclic unsaturated hydrocarbon group having 3 to 19 carbon atoms, such as a benzyl group and a cumyl group. The number of carbon atoms in such a cyclic unsaturated hydrocarbon group is preferably 6 to 10.

Examples of the alkylene groups having 1 to 20 carbon atoms include a methylene group, an ethylene group, a dimethylmethylene group (isopropylidene group), an ethylmethylene group, a methylethylene group and a n-propylene group. The number of carbon atoms in such an alkylene group is preferably 1 to 6.

Examples of the arylene groups having 6 to 20 carbon atoms include an o-phenylene group, a m-phenylene group, a p-phenylene group and a 4,4'-biphenylylene group. The number of carbon atoms in such an arylene group is preferably 6 to 12.

Examples of the silicon-containing group include hydrocarbon groups having 1 to 20 carbon atoms in which any carbon atom is replaced with a silicon atom, for example, alkylsilyl groups such as a trimethylsilyl group, a triethylsilyl group, a t-butyldimethylsilyl group and a triisopropylsilyl group, arylsilyl groups such as a dimethylphenylsilyl group, a methyldiphenylsilyl group and a t-butyldiphenylsilyl group, and a pentamethyldisilanyl group and a trimethylsilylmethyl group. The number of carbon atoms in such an alkylsilyl group is preferably 1 to 10, and the number of carbon atoms in such an arylsilyl group is preferably 6 to 18.

Examples of the nitrogen-containing group include an amino group, and the above hydrocarbon groups having 1 to 20 carbon atoms or silicon-containing groups, in which a =CH-structural unit is replaced with a nitrogen atom, a -CH₂-structural unit is replaced with a nitrogen atom to which such a hydrocarbon group having 1 to 20 carbon atoms is bonded, or a -CH₃ structural unit is replaced with a nitrogen atom or a nitrile group to which such a hydrocarbon group having 1 to 20 carbon atoms is bonded, such as a dimethylamino group, a diethylamino group, an N-morpholinyl group, a dimethylaminomethyl group, a cyano group, a pyrrolidinyl group, a piperidinyl group and a pyridinyl group, and an N-morpholinyl group and a nitro group. The nitrogen-containing group is preferably a dimethylamino group or an N-morpholinyl group.

Examples of the oxygen-containing group include a hydroxyl group, the above hydrocarbon groups having 1 to 20 carbon atoms, silicon-containing groups or nitrogen-containing groups, in which a -CH₂- structural unit is replaced with an oxygen atom or a carbonyl group or a -CH₃ structural unit is replaced with an oxygen atom to which such a hydrocarbon group having 1 to 20 carbon atoms is bonded, such as a methoxy group, an ethoxy group, a t-butoxy group, a phenoxy group, a trimethylsiloxy group, a methoxyethoxy group, a hydroxymethyl group, a methoxymethyl group, an ethoxymethyl group, a t-butoxymethyl group, a 1-hydroxyethyl group, a 1-methoxyethyl group, a 1-ethoxyethyl group, a 2-hydroxyethyl group, a 2-methoxyethyl group, a 2-ethoxyethyl group, a n-2-oxabutylene group, a n-2-oxapentylene group, a n-3-oxapentylene group, an aldehyde group, an acetyl group, a propionyl group, a benzoyl group, a trimethylsilylcarbonyl group, a carbamoyl group, a methylaminocarbonyl group, a carboxy group, a methoxycarbonyl group, a carboxymethyl group, an ethocarboxymethyl group, a carbamoylmethyl group, a furanyl group and a pyranyl group. The oxygen-containing group is preferably a methoxy group.

Examples of the halogen atom include Group XVII atoms such as fluorine, chlorine, bromine and iodine.

Examples of the halogen-containing group include the above hydrocarbon groups having 1 to 20 carbon atoms, silicon-containing groups, nitrogen-containing groups or oxygen-containing groups, in which any hydrogen atom is substituted with a halogen atom, such as a trifluoromethyl group, a tribromomethyl group, a pentafluoroethyl group and a pentafluorophenyl group.

Q is selected as a combination of the same or different members of a halogen atom, a hydrocarbon group having 1 to 20 carbon atoms, an anion ligand, and a neutral ligand capable of coordinating to a lone electron pair.

The details of the halogen atom and the hydrocarbon group having 1 to 20 carbon atoms are as described above. When Q is the halogen atom, Q is preferably a chlorine atom. When Q is the hydrocarbon group having 1 to 20 carbon atoms, the number of carbon atoms in the hydrocarbon group is preferably 1 to 7.

Examples of the anion ligand can include alkoxy groups such as a methoxy group, a t-butoxy group and a phenoxy group, carboxylate groups such as acetate and benzoate, and sulfonate groups such as methylate and tosylate.

Examples of the neutral ligand capable of coordinating to a lone electron pair can include phosphororganic compounds such as trimethylphosphine, triethylphosphine, triphenylphosphine and diphenylmethylphosphine, and ether compounds such as tetrahydrofuran, diethyl ether, dioxane and 1,2-dimethoxyethane.

j is an integer of 1 to 4, and is preferably 2.
n is an integer of 1 to 4, preferably 1 or 2, further preferably 1.

R¹³ and R¹⁴ are each an atom or a substituent selected from the group consisting of a hydrogen atom, a hydrocarbon group having 1 to 20 carbon atoms, an aryl group, a substituted aryl group, a silicon-containing group, a nitrogen-containing group, an oxygen-containing group, a halogen atom and a halogen-containing group, and are optionally the same as or different from each other. R¹³ and R¹⁴ are optionally bonded to each other to form a ring, or are not optionally bonded to each other.

The details of the hydrocarbon group having 1 to 20 carbon atoms, the silicon-containing group, the nitrogen-containing group, the oxygen-containing group, the halogen atom and the halogen-containing group are as described above.

Examples of the aryl group are partially overlapped with examples of the cyclic unsaturated hydrocarbon groups having 3 to 20 carbon atoms described above, and can include aromatic compound-derived substituents such as a phenyl group, a 1-naphthyl group, a 2-naphthyl group, an anthracenyl group, a phenanthrenyl group, a tetracenyl group, a chrysenyl group, a pyrenyl group, an indenyl group, an azulenyl group, a pyrrolyl group, a pyridyl group, a furanyl group and a thiophenyl group. The aryl group is preferably a phenyl group or a 2-naphthyl group.

Examples of the aromatic compound include aromatic hydrocarbon and heterocyclic aromatic compounds, such as benzene, naphthalene, anthracene, phenanthrene, tetracene, chrysene, pyrene, indene, azulene, pyrrole, pyridine, furan and thiophene.

Examples of such a substituted aryl group are partially overlapped with examples of the cyclic unsaturated hydrocarbon groups having 3 to 20 carbon atoms described above, and include groups, in which one or more hydrogen atoms in the aryl group are each substituted with at least one substituent selected from the group consisting of a hydrocarbon group having 1 to 20 carbon atoms, an aryl group, a silicon-containing group, a nitrogen-containing group, an oxygen-containing group, a halogen atom and a halogen-containing group, and specifically include a 3-methylphenyl group (m-tolyl group), a 4-methylphenyl group (p-tolyl group), a 3-ethylphenyl group, a 4-ethylphenyl group, a 3,4-dimethylphenyl group, a 3,5-dimethylphenyl group, a biphenylyl group, a 4-(trimethylsilyl)phenyl group, a 4-aminophenyl group, a 4-(dimethylamino)phenyl group, a 4-(diethylamino)phenyl group, a 4-morpholinylphenyl group, a 4-methoxyphenyl group, a 4-ethoxyphenyl group, a 4-phenoxyphenyl group, a 3,4-dimethoxyphenyl group, a 3,5-dimethoxyphenyl group, a 3-methyl-4-methoxyphenyl group, a 3,5-dimethyl-4-methoxyphenyl group, a 3-(trifluoromethyl)phenyl group, a 4-(trifluoromethyl)phenyl group, a 3-chlorophenyl group, a 4-chlorophenyl group, a 3-fluorophenyl group, a 4-fluorophenyl group, a 5-methylnaphthyl group and a 2-(6-methyl)pyridyl group.

In particular, a bridged metallocene compound (P) in which one or both of R¹³ and R¹⁴ is/are each independently an aryl group is preferable, a bridged metallocene compound (P) in which both of R¹³ and R¹⁴ are each independently an aryl group is more preferable, and a bridged metallocene compound (P) in which both of R¹³ and R¹⁴ are each independently an aryl group and one of R² and R³ is a saturated hydrocarbon group having 4 carbon atoms is still more preferable.

Such a bridged metallocene compound (P) is high in polymerization activity to copolymerization of ethylene and an α-olefin and the bridged metallocene compound (P) is used to thereby selectively stop polymerization by hydrogen introduction into a molecular terminal, and therefore the ethylene/α-olefin copolymer (B) obtained has few unsaturated bonds. Therefore, an ethylene/α-olefin copolymer (B) high in degree of saturation and excellent in heat resistance can be obtained by only performing a simpler hydrogenation operation or even without any hydrogenation operation, and is also excellent in terms of cost. An ethylene/α-olefin copolymer (B) obtained from the compound (P) is high in random copolymerization properties, and thus has a controlled molecular weight distribution. Therefore, it is considered that a thermoplastic elastomer composition according to an aspect of the present invention which includes the ethylene/α-olefin copolymer (B) may have balanced and excellent moldability and sag resistance at a high level.

In the bridged metallocene compound (P) represented by the above formula [I], n is preferably 1. The bridged metallocene compound (hereinafter, also referred to as "bridged metallocene compound (P-1)".) is represented by the following general formula [1]. 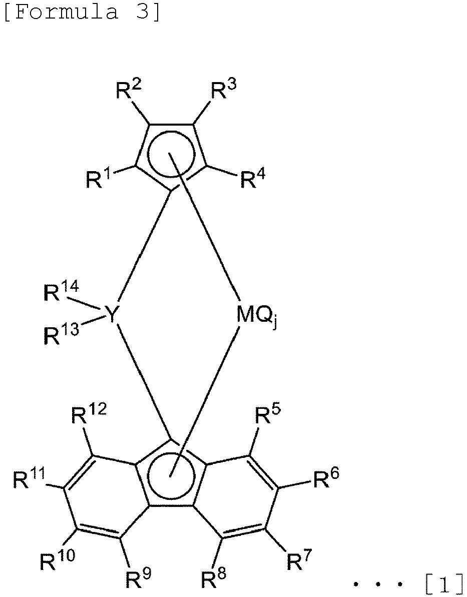 In the formula [1], for example, the definitions of Y, M, R¹ to R¹⁴, Q and j are as described above.

The bridged metallocene compound (P-1) is obtained by a simplified production process and is reduced in production cost, as compared with a compound in which n in the above formula [I] is an integer of 2 to 4, and an advantage thus obtained is that the production cost of the ethylene/α-olefin copolymer (B) is reduced by using the bridged metallocene compound (P-1).

In the bridged metallocene compound (P) represented by the above general formula [I] and the bridged metallocene compound (P-1) represented by the above general formula [1], M is further preferably a zirconium atom. A case where ethylene and one or more monomers selected from α-olefins having 3 to 20 carbon atoms are copolymerized in the presence of an olefin polymerization catalyst including the above-mentioned bridged metallocene compound in which M is a zirconium atom has the advantages of high polymerization activity and a reduction in production cost of the ethylene/α-olefin copolymer (B), as compared with such a case where M is a titanium atom or a hafnium atom.

Examples of the bridged metallocene compound (P) include
[dimethylmethylene(η⁵-cyclopentadienyl) (η⁵-fluorenyl)]zirconium dichloride, [dimethylmethylene(η⁵-cyclopentadienyl) (η⁵-2,7-di-t-butylfluorenyl)] zirconium dichloride, [dimethylmethylene(η⁵-cyclopentadienyl) (η⁵-3,6-dit-butylfluorenyl)]zirconium dichloride, [dimethylmethylene(η⁵-cyclopentadienyl) (η⁵-octamethyloctahydrodibenzofluorenyl)]zirconium dichloride, [dimethylmethylene(η⁵-cyclopentadienyl) (η⁵-tetramethyloctahydrodibenzofluorenyl)]zirconium dichloride,
[cyclohexylidene(η⁵-cyclopentadienyl) (η⁵-fluorenyl)]zirconium dichloride, [cyclohexylidene(η⁵-cyclopentadienyl) (η⁵-2,7-di-t-butylfluorenyl)] zirconium dichloride, [cyclohexylidene(η⁵-cyclopentadienyl) (η⁵-3,6-di-t-butylfluorenyl)]zirconium dichloride, [cyclohexylidene(η⁵-cyclopentadienyl) (η⁵-octamethyloctahydrodibenzofluorenyl)]zirconium dichloride, [cyclohexylidene (η⁵-cyclopentadienyl) (η⁵-tetramethyloctahydrodibenzofluorenyl)]zirconium dichloride,
[diphenylmethylene (η⁵-cyclopentadienyl) (η⁵-fluorenyl)]zirconium dichloride, [diphenylmethylene(η⁵-cyclopentadienyl) (η⁵-2,7-di-t-butylfluorenyl) ] zirconium dichloride, [diphenylmethylene(η⁵-2-methyl-4-t-butylcyclopentadienyl) (η⁵-2,7-di-t-butylfluorenyl)]zirconium dichloride, [diphenylmethylene(η⁵-cyclopentadienyl) (η⁵-3,6-dit-butylfluorenyl)]zirconium dichloride, [diphenylmethylene(η⁵-cyclopentadienyl) (η⁵-octamethyloctahydrodibenzofluorenyl)]zirconium dichloride, [diphenylmethylene{η⁵-(2-methyl-4-i-propylcyclopentadienyl) } (η⁵-octamethyloctahydrodibenzofluorenyl)]zirconium dichloride, [diphenylmethylene (η⁵-cyclopentadienyl) (η⁵-tetramethyloctahydrodibenzofluorenyl)]zirconium dichloride,
[methylphenylmethylene (η⁵-cyclopentadienyl) (η⁵-fluorenyl)]zirconium dichloride, [methylphenylmethylene(η⁵-cyclopentadienyl) (η⁵-2,7-di-t-butylfluorenyl) ] zirconium dichloride, [methylphenylmethylene (η⁵-cyclopentadienyl) (η⁵-3,6-di-t-butylfluorenyl)]zirconium dichloride, [methylphenylmethylene (η⁵-cyclopentadienyl) (η⁵-octamethyloctahydrodibenzofluorenyl)]zirconium dichloride, [methylphenylmethylene (η⁵-cyclopentadienyl) (η⁵-tetramethyloctahydrodibenzofluorenyl)]zirconium dichloride,
[methyl (3-methylphenyl)methylene (η⁵-cyclopentadienyl) (η⁵-fluorenyl)]zirconium dichloride, [methyl(3-methylphenyl)methylene(η⁵-cyclopentadienyl) (η⁵-2,7-di-t-butylfluorenyl)]zirconium dichloride, [methyl(3-methylphenyl)methylene (η⁵-cyclopentadienyl) (η⁵-3, 6-di-t-butylfluorenyl)]zirconium dichloride, [methyl(3-methylphenyl)methylene (η⁵-cyclopentadienyl) (η⁵-octamethyloctahydrodibenzofluorenyl)]zirconium dichloride, [methyl (3-methylphenyl)methylene (η⁵-cyclopentadienyl) (η⁵-tetramethyloctahydrodibenzofluorenyl)]zirconium dichloride,
[methyl (4-methylphenyl)methylene (η⁵-cyclopentadienyl) (η⁵-fluorenyl)]zirconium dichloride, [methyl(4-methylphenyl)methylene(η⁵-cyclopentadienyl) (η⁵-2,7-di-t-butylfluorenyl)]zirconium dichloride, [methyl(4-methylphenyl)methylene (η⁵-cyclopentadienyl) (η⁵-3, 6-di-t-butylfluorenyl)]zirconium dichloride, [methyl(4-methylphenyl)methylene (η⁵-cyclopentadienyl) (η⁵-octamethyloctahydrodibenzofluorenyl)]zirconium dichloride, [methyl (4-methylphenyl)methylene (η⁵-cyclopentadienyl) (η⁵-tetramethyloctahydrodibenzofluorenyl)]zirconium dichloride,
[diphenylsilylene (η⁵-cyclopentadienyl) (η⁵-fluorenyl)]zirconium dichloride, [diphenylsilylene(η⁵-cyclopentadienyl) (η⁵-2,7-di-t-butylfluorenyl) ] zirconium dichloride, [diphenylsilylene (η⁵-cyclopentadienyl) (η⁵-3,6-dit-butylfluorenyl)]zirconium dichloride, [diphenylsilylene(η⁵-cyclopentadienyl) (η⁵-octamethyloctahydrodibenzofluorenyl)]zirconium dichloride, [diphenylsilylene (η⁵-cyclopentadienyl) (η⁵-tetramethyloctahydrodibenzofluorenyl)]zirconium dichloride,
[bis(3-methylphenyl)silylene(η⁵-cyclopentadienyl) (η⁵-fluorenyl)]zirconium dichloride, [bis(3-methylphenyl)silylene(η⁵-cyclopentadienyl) (η⁵-2,7-di-t-butylfluorenyl)]zirconium dichloride, [bis(3-methylphenyl)silylene(η⁵-cyclopentadienyl) (η⁵-3,6-di-t-butylfluorenyl)]zirconium dichloride, [bis(3-methylphenyl) silylene (η⁵-cyclopentadienyl) (η⁵-octamethyloctahydrodibenzofluorenyl)]zirconium dichloride, [bis (3-methylphenyl) silylene (η⁵-cyclopentadienyl) (η⁵-tetramethyloctahydrodibenzofluorenyl)]zirconium dichloride,
[dicyclohexylsilylene (η⁵-cyclopentadienyl) (η⁵-fluorenyl)]zirconium dichloride, [dicyclohexylsilylene(η⁵-cyclopentadienyl) (η⁵-2,7-di-t-butylfluorenyl)]zirconium dichloride, [dicyclohexylsilylene (η⁵-cyclopentadienyl) (η⁵-3,6-di-t-butylfluorenyl)]zirconium dichloride, [dicyclohexylsilylene (η⁵-cyclopentadienyl) (η⁵-octamethyloctahydrodibenzofluorenyl)]zirconium dichloride, [dicyclohexylsilylene (η⁵-cyclopentadienyl) (η⁵-tetramethyloctahydrodibenzofluorenyl)]zirconium dichloride,
[ethylene (η⁵-cyclopentadienyl) (η⁵-fluorenyl)] zirconium dichloride, [ethylene (η⁵-cyclopentadienyl) (η⁵-2,7-di-t-butylfluorenyl)]zirconium dichloride, [ethylene(η⁵-cyclopentadienyl) (η⁵-3,6-di-t-butylfluorenyl)]zirconium dichloride, [ethylene (η⁵-cyclopentadienyl) (η⁵-octamethyloctahydrodibenzofluorenyl)]zirconium dichloride, [ethylene(η⁵-cyclopentadienyl) (η⁵-tetramethyloctahydrodibenzofluorenyl)]zirconium dichloride,
ethylene[η⁵-(3-tert-butyl-5-methylcyclopentadienyl)] (η⁵-fluorenyl) zirconium dichloride, ethylene[η⁵-(3-tert-butyl-5-methylcyclopentadienyl)][η⁵-(3,6-di-tert-butylfluorenyl)]zirconium dichloride, ethylene[η⁵- (3-tert-butyl-5-methylcyclopentadienyl)][η⁵-(2,7-di-tert-butylfluorenyl)]zirconium dichloride, ethylene[η⁵-(3-tert-butyl-5-methylcyclopentadienyl)](octamethyloctahydrodibenzofluorenyl) zirconium dichloride, ethylene[η⁵-(3-tert-butyl-5-methylcyclopentadienyl)](benzofluorenyl)zirconium dichloride, ethylene[η⁵-(3-tert-butyl-5-methylcyclopentadienyl)](dibenzofluorenyl)zirconium dichloride, ethylene[η⁵-(3-tert-butyl-5-methylcyclopentadienyl)](octahydrodibenzofluorenyl)zirconium dichloride, ethylene[η⁵-(3-tert-butyl-5-methylcyclopentadienyl)][η⁵-(2,7-diphenyl-3,6-di-tert-butylfluorenyl)]zirconium dichloride, ethylene[η⁵-(3-tert-butyl-5-methylcyclopentadienyl)][η⁵-(2,7-dimethyl-3,6-di-tert-butylfluorenyl)]zirconium dichloride,
ethylene[η⁵-(3-tert-butylcyclopentadienyl)](η⁵-fluorenyl) zirconium dichloride, ethylene[η⁵-(3-tert-butylcyclopentadienyl)] [η⁵-(3,6-di-tert-butylfluorenyl)]zirconium dichloride, ethylene[η⁵-(3-tert-butylcyclopentadienyl)] [η⁵-(2,7-di-tert-butylfluorenyl)]zirconium dichloride, ethylene[η⁵-(3-tert-butylcyclopentadienyl)](octamethyloctahydrodibenzofluorenyl)z irconium dichloride, ethylene[η⁵-(3-tert-butylcyclopentadienyl)](benzofluorenyl)zirconium dichloride, ethylene[η⁵-(3-tert-butylcyclopentadienyl)](dibenzofluorenyl)zirconium dichloride, ethylene [η⁵-(3-tert-butylcyclopentadienyl)](octahydrodibenzofluorenyl)zirconium dichloride, ethylene [η⁵-(3-tert-butylcyclopentadienyl)] [η⁵-(2,7-diphenyl-3,6-di-tert-butylfluorenyl)]zirconium dichloride, ethylene [η⁵- (3-tert-butylcyclopentadienyl)] [η⁵-(2,7-dimethyl-3,6-di-tert-butylfluorenyl)]zirconium dichloride,
ethylene [η⁵-(3-n-butylcyclopentadienyl)] (η⁵-fluorenyl) zirconium dichloride, ethylene [η⁵- (3-n-butylcyclopentadienyl][η⁵-(3,6-di-tert-butylfluorenyl)]zirconium dichloride, ethylene[η⁵-(3-n-butylcyclopentadienyl)] [η⁵-(2,7-di-tert-butylfluorenyl)]zirconium dichloride, ethylene[η⁵-(3-n-butylcyclopentadienyl)](octamethyloctahydrodibenzofluorenyl)z irconium dichloride, ethylene[η⁵-(3-n-butylcyclopentadienyl)](benzofluorenyl)zirconium dichloride, ethylene[η⁵-(3-n-butylcyclopentadienyl)](dibenzofluorenyl)zirconium dichloride, ethylene [η⁵-(3-n-butylcyclopentadienyl)](octahydrodibenzofluorenyl)zirconium dichloride, ethylene [η⁵-(3-n-butylcyclopentadienyl)] [η⁵-(2,7-diphenyl-3,6-di-tert-butylfluorenyl)]zirconium dichloride, ethylene [η⁵- (3-n-butylcyclopentadienyl)] [η⁵- (2, 7-dimethyl-3, 6-di-tert-butylfluorenyl)]zirconium dichloride,
diphenylmethylene[η⁵-(3-tert-butyl-5-methylcyclopentadienyl)](η⁵-fluorenyl) zirconium dichloride, diphenylmethylene[η⁵-(3-tert-butyl-5-methylcyclopentadienyl)][η⁵-(3,6-di-tert-butylfluorenyl)]zirconium dichloride, diphenylmethylene[η⁵-(3-tert-butyl-5-methylcyclopentadienyl)] [η⁵-(2,7-di-tert-butylfluorenyl)]zirconium dichloride, diphenylmethylene[η⁵-(3-tert-butyl-5-methylcyclopentadienyl)](octamethyloctahydrodibenzofluorenyl) zirconium dichloride, diphenylmethylene[η⁵-(3-tert-butyl-5-methylcyclopentadienyl)](benzofluorenyl)zirconium dichloride, diphenylmethylene[η⁵-(3-tert-butyl-5-methylcyclopentadienyl)](dibenzofluorenyl)zirconium dichloride, diphenylmethylene[η⁵-(3-tert-butyl-5-methylcyclopentadienyl)](octahydrodibenzofluorenyl)zirconium dichloride, diphenylmethylene[η⁵-(3-tert-butyl-5-methylcyclopentadienyl)][η⁵-(2,7-diphenyl-3,6-di-tert-butylfluorenyl)]zirconium dichloride, diphenylmethylene[η⁵-(3-tert-butyl-5-methylcyclopentadienyl)][η⁵-(2,7-dimethyl-3,6-di-tert-butylfluorenyl)]zirconium dichloride,
diphenylmethylene[η⁵-(3-tert-butylcyclopentadienyl)](η⁵-fluorenyl) zirconium dichloride, diphenylmethylene[η⁵-(3-tert-butylcyclopentadienyl)][η⁵-(3,6-di-tert-butylfluorenyl)]zirconium dichloride, diphenylmethylene[η⁵-(3-tert-butylcyclopentadienyl)] [η⁵-(2,7-di-tert-butylfluorenyl)]zirconium dichloride, diphenylmethylene[η⁵-(3-tert-butylcyclopentadienyl)](octamethyloctahydrodibenzofluorenyl)z irconium dichloride, diphenylmethylene[η⁵-(3-tert-butylcyclopentadienyl)](benzofluorenyl)zirconium dichloride, diphenylmethylene[η⁵-(3-tert-butylcyclopentadienyl)](dibenzofluorenyl)zirconium dichloride, diphenylmethylene[η⁵-(3-tert-butylcyclopentadienyl)](octahydrodibenzofluorenyl)zirconium dichloride, diphenylmethylene[η⁵-(3-tert-butylcyclopentadienyl)][η⁵-(2,7-diphenyl-3,6-di-tert-butylfluorenyl)]zirconium dichloride, diphenylmethylene[η⁵-(3-tert-butylcyclopentadienyl)][η⁵-(2,7-dimethyl-3,6-di-tert-butylfluorenyl)]zirconium dichloride,
diphenylmethylene[η⁵-(3-n-butylcyclopentadienyl)](η⁵-fluorenyl) zirconium dichloride, diphenylmethylene[η⁵-(3-n-butylcyclopentadienyl)] [η⁵-(3,6-di-tert-butylfluorenyl)]zirconium dichloride, diphenylmethylene[η⁵-(3-n-butylcyclopentadienyl)] [η⁵-(2,7-di-tert-butylfluorenyl)]zirconium dichloride, diphenylmethylene[η⁵-(3-n-butylcyclopentadienyl)](octamethyloctahydrodibenzofluorenyl)z irconium dichloride, diphenylmethylene[η⁵-(3-n-butylcyclopentadienyl)](benzofluorenyl)zirconium dichloride, diphenylmethylene[η⁵-(3-n-butylcyclopentadienyl)](dibenzofluorenyl)zirconium dichloride, diphenylmethylene[η⁵-(3-n-butylcyclopentadienyl)](octahydrodibenzofluorenyl)zirconium dichloride, diphenylmethylene[η⁵-(3-n-butylcyclopentadienyl)][η⁵-(2,7-diphenyl-3,6-di-tert-butylfluorenyl)]zirconium dichloride, diphenylmethylene[η⁵-(3-n-butylcyclopentadienyl)][η⁵-(2,7-dimethyl-3,6-di-tert-butylfluorenyl)]zirconium dichloride,
di(p-tolyl)methylene[η⁵-(3-tert-butyl-5-methylcyclopentadienyl)](η⁵-fluorenyl) zirconium dichloride, di(p-tolyl)methylene[η⁵-(3-tert-butyl-5-methylcyclopentadienyl)][η⁵-(3,6-di-tert-butylfluorenyl)]zirconium dichloride, di(p-tolyl)methylene[η⁵-(3-tert-butyl-5-methylcyclopentadienyl)][η⁵-(2,7-di-tert-butylfluorenyl)]zirconium dichloride, di(p-tolyl)methylene[η⁵-(3-tert-butyl-5-methylcyclopentadienyl)](octamethyloctahydrodibenzofluorenyl) zirconium dichloride, di(p-tolyl)methylene[η⁵-(3-tert-butyl-5-methylcyclopentadienyl)](benzofluorenyl)zirconium dichloride, di(p-tolyl)methylene[η⁵-(3-tert-butyl-5-methylcyclopentadienyl)](dibenzofluorenyl)zirconium dichloride, di(p-tolyl)methylene[η⁵-(3-tert-butyl-5-methylcyclopentadienyl)](octahydrodibenzofluorenyl)zirconium dichloride, di(p-tolyl)methylene[η⁵-(3-tert-butyl-5-methylcyclopentadienyl)][η⁵-(2,7-diphenyl-3,6-di-tert-butylfluorenyl)]zirconium dichloride, di(p-tolyl)methylene[η⁵-(3-tert-butyl-5-methylcyclopentadienyl)][η⁵-(2,7-dimethyl-3,6-di-tert-butylfluorenyl)]zirconium dichloride,
di(p-tolyl)methylene[η⁵-(3-tert-butylcyclopentadienyl)](η⁵-fluorenyl)zirconium dichloride, di(p-tolyl)methylene[η⁵-(3-tert-butylcyclopentadienyl)][η⁵-(3,6-di-tert-butylfluorenyl)]zirconium dichloride, di(p-tolyl)methylene[η⁵-(3-tert-butylcyclopentadienyl)][η⁵-(2,7-di-tert-butylfluorenyl)]zirconium dichloride, di(p-tolyl)methylene[η⁵-(3-tert-butylcyclopentadienyl)](octamethyloctahydrodibenzofluorenyl)z irconium dichloride, di(p-tolyl)methylene[η⁵-(3-tert-butylcyclopentadienyl)](benzofluorenyl)zirconium dichloride, di(p-tolyl)methylene[η⁵-(3-tert-butylcyclopentadienyl)](dibenzofluorenyl)zirconium dichloride, di(p-tolyl)methylene[η⁵-(3-tert-butylcyclopentadienyl)](octahydrodibenzofluorenyl)zirconium dichloride, di(p-tolyl)methylene[η⁵-(3-tert-butylcyclopentadienyl)][η⁵-(2,7-diphenyl-3,6-di-tert-butylfluorenyl)]zirconium dichloride, di(p-tolyl)methylene[η⁵-(3-tert-butylcyclopentadienyl)][η⁵-(2,7-dimethyl-3,6-di-tert-butylfluorenyl)]zirconium dichloride,
di(p-tolyl)methylene[η⁵-(3-n-butylcyclopentadienyl)](η⁵-fluorenyl) zirconium dichloride, di(p-tolyl)methylene[η⁵-(3-n-butylcyclopentadienyl)][η⁵-(3,6-di-tert-butylfluorenyl)]zirconium dichloride, di(p-tolyl)methylene[η⁵-(3-n-butylcyclopentadienyl)][η⁵-(2,7-di-tert-butylfluorenyl)]zirconium dichloride, di(p-tolyl)methylene[η⁵-(3-n-butylcyclopentadienyl)](octamethyloctahydrodibenzofluorenyl)z irconium dichloride, di(p-tolyl)methylene[η⁵-(3-n-butylcyclopentadienyl)](benzofluorenyl)zirconium dichloride, di(p-tolyl)methylene[η⁵-(3-n-butylcyclopentadienyl)](dibenzofluorenyl)zirconium dichloride, di(p-tolyl)methylene[η⁵-(3-n-butylcyclopentadienyl)](octahydrodibenzofluorenyl)zirconium dichloride, di(p-tolyl)methylene[η⁵-(3-n-butylcyclopentadienyl)](2,7-diphenyl-3,6-di-tert-butylfluorenyl)zirconium dichloride, and di(p-tolyl)methylene[η⁵-(3-n-butylcyclopentadienyl)][η⁵-(2,7-dimethyl-3,6-di-tert-butylfluorenyl)]zirconium dichloride.

Examples of the bridged metallocene compound (P) further include the compound in which a zirconium atom of the aforementioned compound is replaced with a hafnium atom or a titanium atom, and the compound in which a chloro ligand is replaced with a methyl group. Herein, η⁵-tetramethyloctahydrodibenzofluorenyl and η⁵-octamethyloctahydrodibenzofluorenyl, as constituent portions of the bridged metallocene compound (P) exemplified, respectively represent a 4,4,7,7-tetramethyl-(5a,5b,11a,12,12a-η⁵)-1,2,3,4,7,8,9,10-octahydrodibenzo[b,H]fluorenyl group and a 1,1,4,4,7,7,10,10-octamethyl-(5a,5b,11a,12,12a-η⁵)-1,2,3,4,7,8,9,10-octahydrodibenzo[b,H]fluorenyl group.

The bridged metallocene compound (P) may be used singly or in combinations of two or more kinds thereof.

### [Compound (Q)]

The compound (Q) is at least one compound selected from the group consisting of an organometal compound (Q-1), an organoaluminum oxy compound (Q-2), and a compound (Q-3) that reacts with the bridged metallocene compound (P) to form an ion pair.

The organometal compound (Q-1) here used is specifically any of organometal compounds (Q-1a), (Q-1b) and (Q-1c) as described below, including Groups 1 and 2 elements and Groups 12 and 13 elements in the periodic table.

(Q-1a) An organoaluminum compound represented by general formula R^{a}ₘAl(OR^{b})ₙHₚX_{q}: wherein R^{a} and R^{b} are optionally the same as or different from each other and each represent a hydrocarbon group having 1 to 15, preferably 1 to 4 carbon atoms, X represents a halogen atom, m is a number of 0 < m 5 3, n is a number of 0 ≤ n < 3, p is a number of 0 ≤ p < 3, q is a number of 0 ≤ q < 3, and m + n + p + q = 3 is satisfied.

Examples of such a compound can include tri-n-alkylaluminum such as trimethylaluminum, triethylaluminum, tri-n-butylaluminum, tri-n-hexylaluminum and tri-n-octylaluminum, tri-branched alkylaluminum such as triisopropylaluminum, triisobutylaluminum, tri-sec-butylaluminum, tri-t-butylaluminum, tri-2-methylbutylaluminum, tri-3-methylhexylaluminum and tri-2-ethylhexylaluminum, tricycloalkylaluminum such as tricyclohexylaluminum and tricyclooctylaluminum, triarylaluminum such as triphenylaluminum and tri(4-methylphenyl) aluminum, dialkylaluminum hydrides such as diisopropylaluminum hydride and diisobutylaluminum hydride, alkenylaluminum represented by general formula (i-C₄H₉)ₓAl_{y}(C₅H₁₀)_{z} (wherein x, y and z are positive numbers and z ≤ 2x is satisfied.), such as isoprenylaluminum, alkylaluminum alkoxides such as isobutylaluminum methoxide and isobutylaluminum ethoxide, dialkylaluminum alkoxides such as dimethylaluminum methoxide, diethylaluminum ethoxide and dibutylaluminumbutoxide, alkylaluminum sesquialkoxides such as ethylaluminum sesquiethoxide and butylaluminum sesquibutoxide, partially alkoxylated alkylaluminum having an average compositional ratio represented by, for example, general formula R^{a}_{2.5}Al(OR^{b})_{0.5}, alkylaluminum aryloxides such as diethylaluminum phenoxide and diethylaluminum(2,6-di-t-butyl-4-methylphenoxide), dialkylaluminum halides such as dimethylaluminum chloride, diethylaluminum chloride, dibutylaluminum chloride, diethylaluminum bromide and diisobutylaluminum chloride, alkylaluminum sesquihalides such as ethylaluminum sesquichloride, butylaluminum sesquichloride and ethylaluminum sesquibromide, partially halogenated alkylaluminum of, for example, alkylaluminum dihalides typified by ethylaluminum dichloride, dialkylaluminum hydrides such as diethylaluminum hydride and dibutylaluminum hydride, alkylaluminum dihydrides such as ethylaluminum dihydride and propylaluminum dihydride and other partially hydrogenated alkylaluminum, and partially alkoxylated and halogenated alkylaluminum such as ethylaluminum ethoxychloride, butylaluminum butoxychloride and ethylaluminum ethoxybromide. A compound similar to the compound represented by the above-mentioned general formula R^{a}ₘAl(OR^{b})ₙHₚX_{q} can also be used, and examples thereof can include an organoaluminum compound in which two or more aluminum compounds are bonded via a nitrogen atom. Specific examples of such a compound can include (C₂H₅)₂AlN(C₂H₅)Al(C₂H₅)₂.

(Q-1b) A complex alkylated compound represented by general formula M²AlR^{a}₄, including a Group I metal in the periodic table and aluminum: wherein M² represents Li, Na or K, and R^{a} represents a hydrocarbon group having 1 to 15, preferably 1 to 4 carbon atoms.

Examples of such a compound can include LiAl(C₂H₅)₄ and LiAl(C₇H₁₅)₄.

(Q-1c) A dialkyl compound represented by general formula R^{a}R^{b}M³, including a Group II or Group XII metal in the periodic table: wherein R^{a} and R^{b} are optionally the same as or different from each other and each represent a hydrocarbon group having 1 to 15, preferably 1 to 4 carbon atoms, and M³ is Mg, Zn or Cd.

A heretofore known aluminoxane can be used as it is, as the organoaluminum oxy compound (Q-2). Specific examples can include a compound represented by the following general formula [III] and a compound represented by the following general formula [IV].

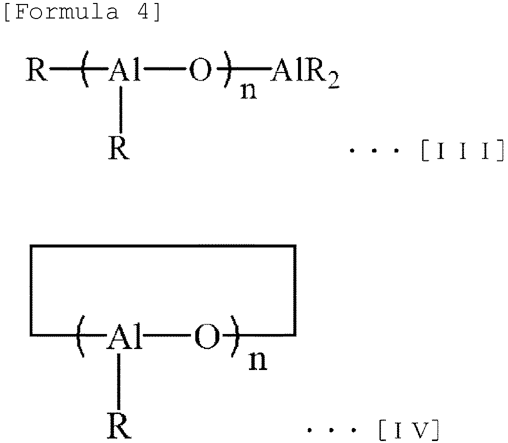

In the formulas [III] and [IV], R represents a hydrocarbon group having 1 to 10 carbon atoms, and n represents an integer of 2 or more.

In particular, methylaluminoxane is utilized in which R is a methyl group and n is 3 or more, preferably 10 or more. An organoaluminum compound is allowed to be slightly incorporated in such aluminoxane.

When copolymerization of ethylene and an α-olefin having 3 or more carbon atoms is performed at a high temperature in the present invention, a benzene-insoluble organoaluminum oxy compound exemplified in Patent Literature JP-A H02-78687 can also be applied. An organoaluminum oxy compound described in Patent Literature JP-A H02-167305, or aluminoxane having two or more alkyl groups, described in Patent Literature JP-A H02-24701 and JP-A H03-103407, can also be suitably utilized. The "benzene-insoluble organoaluminum oxy compound" that may be used in an aspect of the present invention is a compound that usually contains 10% or less, preferably 5% or less, particularly preferably 2% or less of an Al component to be dissolved in benzene at 60°C, in terms of Al atom, and that is insoluble or hardly soluble in benzene.

Examples of the organoaluminum oxy compound (Q-2) can also include modified methylaluminoxane represented by the following general formula [V].

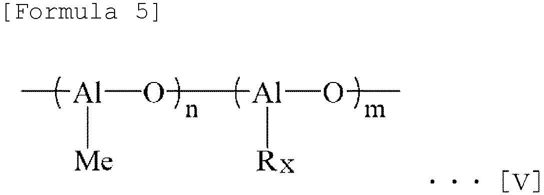

In the formula [V], R represents a hydrocarbon group having 1 to 10 carbon atoms, and m and n each independently represent an integer of 2 or more.

Methylaluminoxane as one example of the organoaluminum oxy compound (Q-2) is easily available and has high polymerization activity, and thus is commonly used as an activator in polyolefin polymerization. However, methylaluminoxane has been used as solutions of aromatic hydrocarbons such as toluene or benzene, which are environmentally undesirable, because it is difficult to dissolve in saturated hydrocarbons. Therefore, a flexible body of methylaluminoxane represented by formula [IV] has been recently developed and used as aluminoxane dissolved in a saturated hydrocarbon. Such modified methylaluminoxane represented by the formula [V] is prepared by using trimethylaluminum and alkylaluminum other than trimethylaluminum as described in, for example, US Pat. No. 4960878 and US Pat. No. 5041584, and, for example, is prepared by using trimethylaluminum and triisobutylaluminum. Aluminoxane in which Rx is an isobutyl group is commercially available, in the form of a solution in a saturated hydrocarbon, under any of trade names MMAO and TMAO (see Tosoh Finechem Corporation, Tosoh Research & Technology Review, Vol 47, 55 (2003)).

Examples of the organoaluminum oxy compound (Q-2) can further include an organoaluminum oxy compound represented by the following general formula [VI], containing boron.

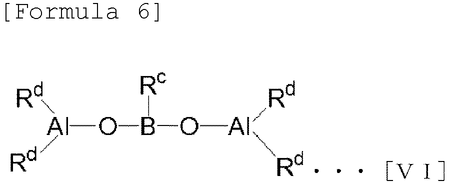

In the formula [VI], R^{c} represents a hydrocarbon group having 1 to 10 carbon atoms. R^{d}(s) are optionally the same as or different from one another, and each represent a hydrogen atom, a halogen atom or a hydrocarbon group having 1 to 10 carbon atoms.

Examples of the compound (Q-3) (hereinafter, sometimes abbreviated as "ionized ionic compound" or simply "ionic compound".) that reacts with the bridged metallocene compound (P) to form an ion pair can include Lewis acids, ionic compounds, borane compounds and carborane compounds described in, for example, Patent Literature JP-A H01-501950, JP-A H01-502036, JP-A H03-179005, JP-A H03-179006, JP-A H03-207703, JP-A H03-207704 and US Pat. No. 5321106. Examples can further include heteropoly compounds and isopoly compounds.

The ionized ionic compound preferably used in an aspect of the present invention is a boron compound represented by the following general formula [VII].

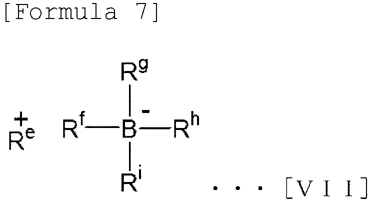

Examples of R^{e+} in the formula [VII] include H⁺, carbenium cation, oxonium cation, ammonium cation, phosphonium cation, cycloheptyltrienyl cation, and ferrocenium cation having a transition metal. R^{f} to Rⁱ are optionally the same as or different from one another, and are each a substituent selected from a hydrocarbon group having 1 to 20 carbon atoms, a silicon-containing group, a nitrogen-containing group, an oxygen-containing group, a halogen atom and a halogen-containing group, preferably a substituted aryl group.

Specific examples of the aforementioned carbenium cation include tri-substituted carbenium cations such as triphenylcarbenium cation, tris(4-methylphenyl)carbenium cation and tris(3,5-dimethylphenyl)carbenium cation.

Specific examples of the aforementioned ammonium cation include trialkyl-substituted ammonium cations such as trimethylammonium cation, triethylammonium cation, tri(n-propyl)ammonium cation, triisopropylammonium cation, tri(n-butyl)ammonium cation and triisobutylammonium cation, N,N-dialkylanilinium cations such as N,N-dimethylanilinium cation, N,N-diethylanilinium cation and N,N-2,4,6-pentamethylanilinium cation, and dialkylammonium cations such as diisopropylammonium cation and dicyclohexylammonium cation.

Specific examples of the aforementioned phosphonium cation include triarylphosphonium cations such as triphenylphosphonium cation, tris(4-methylphenyl)phosphonium cation and tris(3,5-dimethylphenyl)phosphonium cation.

R^{e+}, among the above specific examples, is preferably, for example, the carbenium cation or the ammonium cation, particularly preferably triphenylcarbenium cation, N,N-dimethylanilinium cation or N,N-diethylanilinium cation.

Examples of the carbenium cation-containing compound among the ionized ionic compound preferably used in an aspect of the present invention can include triphenylcarbenium tetraphenylborate, triphenylcarbenium tetrakis(pentafluorophenyl)borate, triphenylcarbenium tetrakis{3,5-di-(trifluoromethyl)phenyl}borate, tris(4-methylphenyl)carbenium tetrakis(pentafluorophenyl)borate and tris(3,5-dimethylphenyl)carbenium tetrakis(pentafluorophenyl)borate.

Examples of the trialkyl-substituted ammonium cation-containing compound among the ionized ionic compound preferably used in an aspect of the present invention can include triethylammonium tetraphenylborate, tripropylammonium tetraphenylborate, tri(n-butyl)ammonium tetraphenylborate, trimethylammonium tetrakis(4-methylphenyl)borate, trimethylammonium tetrakis(2-methylphenyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis{4-(trifluoromethyl)phenyl}borate, tri(n-butyl)ammonium tetrakis{3,5-di(trifluoromethyl)phenyl}borate, tri(n-butyl)ammonium tetrakis(2-methylphenyl)borate, dioctadecylmethylammonium tetraphenylborate, dioctadecylmethylammonium tetrakis(4-methylphenyl)borate, dioctadecylmethylammonium tetrakis(4-methylphenyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis{4-(trifluoromethyl)phenyl}borate, dioctadecylmethylammonium tetrakis{3,5-di(trifluoromethyl)phenyl}borate and dioctadecylmethylammonium.

Examples of the N,N-dialkylanilinium cation-containing compound among the ionized ionic compound preferably used in an aspect of the present invention can include N,N-dimethylanilinium tetraphenylborate, N,N-dimethylanilinium tetrakis(pentafluorophenyl)borate, N,N-dimethylanilinium tetrakis{3,5-di(trifluoromethyl)phenyl}borate, N,N-diethylanilinium tetraphenylborate, N,N-diethylanilinium tetrakis(pentafluorophenyl)borate, N,N-diethylanilinium tetrakis{3,5-di(trifluoromethyl)phenyl}borate, N,N-2,4,6-pentamethylanilinium tetraphenylborate and N,N-2,4,6-pentamethylanilinium tetrakis(pentafluorophenyl)borate.

Examples of the dialkylammonium cation-containing compound among the ionized ionic compound preferably used in an aspect of the present invention can include di-n-propylammonium tetrakis(pentafluorophenyl)borate and dicyclohexylammonium tetraphenylborate.

Other ionic compounds exemplified in Patent Literature JP-A 2004-51676 can also be used without any limitation.

The aforementioned ionic compound (Q-3) may be used singly or in combinations of two or more kinds thereof.

Examples of the configuration of the catalyst system include the following [1] to [4].
[1] The catalyst system includes the bridged metallocene compound (P) and the compound (Q-2).
[2] The catalyst system includes the bridged metallocene compound (P), the compound (Q-1) and the compound (Q-2).
[3] The catalyst system includes the bridged metallocene compound (P), the compound (Q-1) and the compound (Q-3).
[4] The catalyst system includes the bridged metallocene compound (P), the compound (Q-2) and the compound (Q-3).

The bridged metallocene compound (P), and the compounds (Q-1) to (Q-3) may be introduced into the reaction system in any order.

### [Carrier (R)]

A carrier (R) may be, if necessary, used as a constituent component of the olefin polymerization catalyst in an aspect of the present invention.

The carrier (R) optionally used in an aspect of the present invention is an inorganic or organic compound and is a granular or fine particulate solid. In particular, the inorganic compound is preferably porous oxide, inorganic chloride, clay, clay mineral or an ion-exchangeable layered compound.

The porous oxide here used can be specifically, for example, SiO₂, Al₂O₃, MgO, ZrO, TiO₂, B₂O₃, CaO, ZnO, BaO or ThO₂, or a composite or a mixture including such an oxide, for example, natural or synthetic zeolite, SiO₂-MgO, SiO₂-Al₂O₃, SiO₂-TiO₂, SiO₂-V₂O₅, SiO₂-Cr₂O₃ or SiO₂-TiO₂-MgO. In particular, one mainly containing SiO₂ and/or Al₂O₃ is preferable. Such porous oxide differs in properties depending on the type and the production method, and the carrier preferably used in an aspect of the present invention has a particle size in a range from 0.5 to 300 µm, preferably 1.0 to 200 µm, a specific surface area in a range from 50 to 1000 m²/g, preferably 100 to 700 m²/g, and a pore volume in a range from 0.3 to 3.0 cm³/g. Such a carrier is, if necessary, fired at 100 to 1,000°C, preferably 150 to 700°C, and then used.

The inorganic chloride used is, for example, MgCl₂, MgBr₂, MnCl₂ or MnBr₂. The inorganic chloride may be used as it is, or may be pulverized by a ball mill or a vibrating mill, and then used. Alternatively, the inorganic chloride, which is dissolved in a solvent such as an alcohol and then precipitated in the form of fine particles by a precipitating agent, may also be used.

Clay is usually constituted with clay mineral as a main component. The ion-exchangeable layered compound is a compound having a crystal structure in which surfaces configured are mutually stacked in parallel by a weak force with, for example, an ionic bond, and includes an exchangeable ion. Most clay mineral corresponds to such an ion-exchangeable layered compound. Such clay, clay mineral, and ion-exchangeable layered compound here used are not limited to natural products, and can also be artificially synthesized products. Examples of the clay, clay mineral or ion-exchangeable layered compound can include clay, clay mineral, and ionic crystalline compounds having a layered crystal structure, such as a hexagonal closest packing type, an antimony type, a CdCl₂ type and a CdI₂ type. Examples of such clay and clay mineral include kaolin, bentonite, kibushi clay, gairome clay, allophane, hisingerite, pyrophyllite, mica, montmorillonite, vermiculite, chlorite rocks, palygorskite, kaolinite, nacrite, dickite and halloysite, and examples of such an ion-exchangeable layered compound include crystalline acidic salts of polyvalent metals, such as α-Zr(HAsO₄)₂·H₂O, α-Zr(HPO₄)₂, α-Zr(KPO₄)₂·3H₂O, α-Ti(HPO₄)₂, α-Ti(HAsO₄)₂·H₂O, α-Sn(HPO₄)₂·H₂O, γ-Zr(HPO₄)₂, γ-Ti(HPO₄)₂ and γ-Ti(NH₄PO₄)₂·H₂O. The clay and the clay mineral for use in an aspect of the present invention are also preferably subjected to a chemical treatment. The chemical treatment here used can be any treatment such as a surface treatment for removal of impurities attached to a surface, or a treatment having an effect on the crystal structure of the clay. Specific examples of the chemical treatment include an acid treatment, an alkali treatment, a salt treatment and an organic substance treatment.

The ion-exchangeable layered compound may be a layered compound where a space between layers is enlarged by exchanging an exchangeable ion in the space between layers with another large and bulky ion by means of ion exchangeability. Such a bulky ion serves as a shore supporting a layered structure, and is usually referred to as pillar. Such introduction of another substance (guest compound) into the space between layers in the layered compound is referred to as intercalation. Examples of the guest compound include cationic inorganic compounds such as TiCl₄ and ZrCl₄, metal alkoxides (R represents, for example, a hydrocarbon group) such as Ti(OR)₄, Zr(OR)₄, PO(OR)₃ and B(OR)₃, and metal hydroxide ions such as [Al₁₃O₄(OH)₂₄]⁷⁺, [Zr₄(OH)₁₄]²⁺ and [Fe₃O(OCOCH₃)₆]⁺. Such a compound may be used singly or in combinations of two or more kinds thereof. In intercalation of such a compound, for example, a polymerized product obtained by hydrolytic polycondensation of a metal alkoxide (R represents, for example, a hydrocarbon group) such as Si(OR)₄, Al(OR)₃ or Ge(OR)₄, or a colloidal inorganic compound such as SiO₂ can also co-exist. Examples of the pillar include oxide generated by intercalation of the aforementioned metal hydroxide ion into the space between layers and then heating and dehydration.

In particular, the clay or the clay mineral is preferable, and montmorillonite, vermiculite, pectolite, tainiolite and synthetic mica are particularly preferable.

Examples of the organic compound as the carrier (R) can include a granular or fine particulate solid having a particle size in a range from 0.5 to 300 µm. Specific examples can include a (co)polymer generated with as a main component α-olefin having 2 to 14 carbon atoms, such as ethylene, propylene, 1-butene or 4-methyl-1-pentene, a (co)polymer generated with as a main component vinyl cyclohexane or styrene, and modified products thereof.

The usage method and the order of addition of each component of the polymerization catalyst can be arbitrarily selected. At least two or more components in the catalyst may be contacted with each other in advance.

The bridged metallocene compound (P) (hereinafter, also referred to as "component (P)") is used in an amount of usually 10⁻⁹ to 10⁻¹ mol, preferably 10⁻⁸ to 10⁻² mol per liter of a reaction volume.

The organometal compound (Q-1) (hereinafter, also referred to as "component (Q-1)".) is used in an amount so that the molar ratio [(Q-1)/M] of the component (Q-1) to a transition metal atom (M) in the component (P) is usually 0.01 to 50,000, preferably 0.05 to 10,000.

The organoaluminum oxy compound (Q-2) (hereinafter, also referred to as "component (Q-2)".) is used in an amount so that the molar ratio [(Q-2)/M] of the aluminum atom in the component (Q-2) to the transition metal atom (M) in the component (P) is usually 10 to 5,000, preferably 20 to 2,000.

The ionic compound (Q-3) (hereinafter, also referred to as "component (Q-3)".) is used in an amount so that the molar ratio [(Q-3)/M] of the component (Q-3) to the transition metal atom (M) in the component (P) is usually 1 to 10,000, preferably 1 to 5,000.

The polymerization temperature is usually -50°C to 300°C, preferably 30 to 250°C, more preferably 100°C to 250°C, further preferably 130°C to 200°C. As the temperature in the polymerization temperature region in the above range is higher, the solution viscosity during polymerization is lower and removal of heat of polymerization is also easier. The polymerization pressure is usually normal pressure to 10 MPa-gauge pressure (MPa-G), preferably normal pressure to 8 MPa-G. The polymerization reaction can be carried out in any method of batchwise, semi-continuous, and continuous methods. Such polymerization can also be continuously carried out in two or more polymerization instruments different in reaction conditions.

The molecular weight of the resulting copolymer can be regulated by the changes in hydrogen concentration and polymerization temperature in a polymerization system. The molecular weight can also be regulated by the amount of the component (Q) used. In the case of addition of hydrogen, the amount added is properly about 0.001 to 5,000 NL per kg of the copolymer to be generated.

The polymerization solvent for use in a liquid phase polymerization method is usually an inert hydrocarbon solvent, and is preferably a saturated hydrocarbon having a boiling point of 50°C to 200°C under normal pressure. Specific examples of the polymerization solvent include aliphatic hydrocarbons such as propane, butane, pentane, hexane, heptane, octane, decane, dodecane and kerosene oil, and alicyclic hydrocarbons such as cyclopentane, cyclohexane and methylcyclopentane, particularly preferably include hexane, heptane, octane, decane and cyclohexane. The α-olefin to be polymerized, by itself, can also be used as the polymerization solvent. While an aromatic hydrocarbon such as benzene, toluene or xylene, or a halogenated hydrocarbon such as ethylene chloride, chlorobenzene or dichloromethane can also be used as the polymerization solvent, use thereof is not preferable in terms of a reduction in load on the environment and in terms of minimization of the influence on human health.

In general, kinematic viscosity at 100°C of the olefin-based polymer depends on the molecular weight of the polymer. In other words, a high molecular weight leads to a high viscosity and a low molecular weight leads to a low viscosity, and thus the kinematic viscosity at 100°C is adjusted by the above molecular weight adjustment. A low molecular weight component in a polymer obtained can be removed by a heretofore known method such as distillation under reduced pressure, to thereby allow for adjustment of the molecular weight distribution (Mw/Mn) of the polymer obtained. The polymer obtained may be further subjected to hydrogen addition (hereinafter, also referred to as hydrogenation.) by a conventionally known method. If the number of double bonds in the polymer obtained by such hydrogenation is reduced, oxidation stability and heat resistance are enhanced.

The ethylene/α-olefin copolymer (B) obtained by adjusting the molecular weight as described above may be used singly, or two or more of such copolymers different in molecular weight or those different in compositional ratio of monomers may be combined.

The ethylene-α-olefin copolymer (B) according to an aspect of the present invention may be a modified copolymer in which a substituent other than a saturated hydrocarbon group is added to an ethylene-α-olefin copolymer. In particular, a modified copolymer in which the copolymer is modified by one or more compounds selected from a compound having a substituent other than a saturated hydrocarbon group and having a carbon-carbon unsaturated bond is preferable, and a modified copolymer in which the copolymer is modified by one or more selected from unsaturated carboxylic acid and a derivative thereof is more preferable. The graft position of the substituent is not particularly limited.

In the case of modification by one or more compounds selected from a compound having a substituent other than a saturated hydrocarbon group and having a carbon-carbon unsaturated bond, examples of the substituent other than a saturated hydrocarbon group include substituents having an aromatic ring and/or a heteroaromatic ring such as a benzene ring, a naphthalene ring, a pyridine ring or a thiophene ring, oxygen-containing groups such as a carboxy group, an acid anhydride group, an ether bond, an ester bond, a hydroxy group and an epoxy group, nitrogen-containing groups such as an amide group, an imide bond, an amino group, a nitrile group and an isocyanate group, sulfur-containing groups such as a sulfinyl group, a sulfanyl group and a sulfonyl group, and silicon-containing groups such as a trialkylsilyl group and a trialkoxysilyl group.

Examples of the compound having a substituent other than a saturated hydrocarbon group and having a carbon-carbon unsaturated bond according to an aspect of the present invention include compounds having an aromatic ring, such as styrene and allylbenzene, compounds having an acid or acid-induced group, such as acid, acid anhydride, ester, amide and imide, compounds having an oxygen-containing group, such as alcohol, epoxy and ether, compounds having a nitrogen-containing group, such as amine, nitrile and isocyanate, compounds having a sulfur-containing group, such as sulfide, sulfoxide, sulfone and sulfonamide, and compounds having a silicon-containing group, such as vinylsilane. In particular, a compound having an aromatic ring, a compound having an acid or acid-induced group and a compound having an oxygen-containing group are preferable, a compound having an acid or acid-induced group and a compound having an oxygen-containing group are more preferable, and unsaturated carboxylic acid and a derivative thereof are further preferable.

Examples of the unsaturated carboxylic acid include (meth)acrylic acid, maleic acid, fumaric acid, tetrahydrophthalic acid, itaconic acid, citraconic acid, crotonic acid, isocrotonic acid and nadic acid (endocis-bicyclo[2,2,1]hept-5-ene-2,3-dicarboxylic acid).

Examples of the derivative of the unsaturated carboxylic acid include acid anhydride, ester, amide and imide of the unsaturated carboxylic acid.

Examples of the ester of the unsaturated carboxylic acid include esters and half esters, such as methyl (meth)acrylate, ethyl (meth)acrylate, maleic acid monoethyl ester, maleic acid diethyl ester, fumaric acid monomethyl ester, fumaric acid dimethyl ester, itaconic acid monomethyl ester and itaconic acid diethyl ester.

Examples of the unsaturated carboxylic acid amides include (meth)acrylamides, maleic acid monoamide, maleic acid diamide, maleic acid-N-monoethylamide, maleic acid-N,N-diethylamide, maleic acid-N-monobutylamide, maleic acid-N,N-dibutylamide, fumaric acid monoamide, fumaric acid diamide, fumaric acid-N-monobutylamide and fumaric acid-N,N-dibutylamide.

Examples of the unsaturated carboxylic acid imides include maleimide, N-butylmaleimide and N-phenylmaleimide.

Among those unsaturated carboxylic acids and derivatives thereof mentioned above, unsaturated dicarboxylic acids and derivatives thereof are more preferable, and, in particular, maleic acid and maleic anhydride are particularly preferable with the result that, for example, a by-product such as a homopolymer is hardly generated in a reaction for production of the modified copolymer.

Examples of the modification method include a method reacting with reactive gas or liquid, in addition to the above.

Examples of the reactive gas or liquid include air, oxygen, ozone, chlorine, bromine, sulfur dioxide and sulfuryl chloride, and one or more thereof can be used. In particular, an oxidation reaction using air and/or oxygen, chlorination with chlorine, and respective chlorosulfonation reactions using sulfuryl chloride, chlorine and sulfur dioxide, chlorine and sulfuryl chloride, and chlorine, sulfur dioxide and sulfuryl chloride are preferable. The gas for use in the present method may be diluted with an inert gas such as nitrogen, argon or carbon dioxide to any concentration, and then used.

In the case where the ethylene/α-olefin copolymer (B) is a modified copolymer, the amount of modification thereof is 0.1 to 20 mass%, preferably 0.5 to 15 mass%. In particular, when, in the case where the X/Y block copolymer (A) is a modified copolymer, the amount of modification of the ethylene/α-olefin copolymer is in the above-described range, compatibility with the X/Y block copolymer (A) is improved, so that it is possible to easily exhibit an effect of, for example, improving sag resistance. An effect of suppressing bleed-out is also obtained.

A modified product of the copolymer (B) according to an aspect of the present invention can be produced by modifying the ethylene/α-olefin copolymer by any of various heretofore known methods described in, for example, Patent Literature JP-A S61-126120 and JP2593264B, or for example, the following methods (1) or (2).
(1) The copolymer is charged into, for example, an extruder or a batch reactor, and a vinyl compound and a reactive gas/liquid to be reacted are added thereto and modified.
(2) The copolymer is dissolved into a solvent, and a vinyl compound and a reactive gas/liquid are added and modified.

In any of the above methods, the graft copolymerization is preferably carried out in the presence of, for example, one, or two or more radical initiators to ensure that the vinyl compound and/or the reactive gas/liquid will be graft copolymerized efficiently.

Examples of the radical initiators include organic peroxides and azo compounds.

Examples of the organic peroxides include benzoyl peroxide, dichlorobenzoyl peroxide, dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene. Examples of the azo compounds include azobisisobutyronitrile and dimethyl azoisobutyrate.

Among those described above, in particular, dialkyl peroxides such as dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene are preferably used.

The amount of the radical initiator used is usually 0.001 to 5 parts by mass, preferably 0.01 to 4 parts by mass, further preferably 0.05 to 3 parts by mass per 100 parts by mass of the copolymer (A) before modification.

Among those described above, modification by an oxidation reaction using air and/or oxygen may be made in the presence of one, or two or more selected from, for example, metals or metal salts, inorganic acids, and organic acids, in addition to the radical initiator, in order to promote the reaction.

Examples of the metals or metal salts include manganese acetate, cobalt acetate, manganese chloride, nickel oxide and copper, examples of the inorganic acids include hydrochloric acid and nitric acid, and examples of the organic acids include formic acid, acetic acid, oxalic acid, malonic acid, maleic acid, tartaric acid, malic acid, adipic acid and citric acid.

The reaction temperature in the modification reaction is usually 20 to 350°C, preferably 60 to 300°C. In the case of modification with reactive gas, the reaction pressure is preferably normal pressure to 5 MPa.

The modified copolymer produced by any of the above-described methods may be further subjected to secondary modification. Mention is made of, for example, a method described in, for example, Japanese Translation of PCT International Application Publication No. 2008-508402.

### [Polyolefin-based resin (C)]

A polyolefin-based resin (C) according to an aspect of the present invention satisfies the following requirement (C-1) .

Requirement (c-1) MFR (230°C and 2.16 kg) is 0.1 to 500 g/10 min.

The MFR of the polyolefin-based resin (C) according to an aspect of the present invention (230°C, 2.16 kg) is 0.1 to 500 g/10 min, preferably 0.5 g to 100 g/10 min, more preferably 1 to 50 g/10 min. For a polyolefin-based resin having a MFR (230°C, 2.16 kg) of 0.1 to 500 g/10 min, the kinetic viscosity at 100°C is 50,000 mm²/s or more, and it is difficult to measure the kinetic viscosity at 100°C in practice. That is, the polyolefin-based resin (C) according to an aspect of the present invention usually has a kinetic viscosity of more than 50,000 mm²/s at 100°C.

The MFR (230°C, 2.16 kg) of the polyolefin-based resin (C) in an aspect of the present invention is a value measured at a temperature of 230°C and a load of 2.16 kg in accordance with JIS K 7210-1.

When the MFR (230°C, 2.16 kg) of the polyolefin resin (C) is within the above-described range, the balance of effects of improving the moldability (fluidity) and heat resistance of the thermoplastic elastomer composition is improved.

The polyolefin-based resin (C) according to an aspect of the present invention is a polymer of a monomer having an olefin as a main component. Various known olefin-based polymers can be used without particular limitation as long as they satisfy the requirement (C-1). Examples thereof include homopolymers and copolymers of α-olefins having 2 to 20 carbon atoms, such as ethylene, propylene, 1-butene, 1-pentene, 4-methyl-1-pentene, 1-hexene, 1-heptene, 1-octene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. Specific examples thereof include olefin-based polymers such as high-pressure low-density polyethylene (LDPE), linear low-density polyethylene (LLDPE), medium-density polyethylene (MDPE), high-density polyethylene (HDPE), homopolypropylene (hPP), polypropylene random copolymers (rPP), block polypropylene (bPP), poly(1-butene), poly(4-methyl-1-pentene), low-crystalline or amorphous ethylene/propylene random copolymers, ethylene/1-butene random copolymers and propylene/1-butene random copolymers, thermoplastic elastomer compositions containing two or more of these polymers, ethylene/vinyl acetate copolymers (EVA), ethylene/(meth)acrylic acid copolymers and metal salts thereof, and ethylene/cyclic olefin copolymers.

The polyolefin-based resin (C) may contain nonconjugated diene as an olefinic copolymer component. Specific examples of the nonconjugated diene include chain nonconjugated dienes such as 1,4-hexadiene, 1,6-octadiene, 2-methyl-1,5-hexadiene, 6-methyl-1,5-heptadiene and 7-methyl-1,6-octadiene, cyclic nonconjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene, and trienes such as 2,3-diisopropylidene-5-norbornene, 2-ethylidene-3-isopropylidene-5-norbornene, 2-propenyl-2,2-norbornadiene, 1,3,7-octatriene and 1,4,9-decatriene. Among them, 1,4-hexadiene and cyclic nonconjugated, in particular, dicyclopentadiene, 5-ethylidene-2-norbornene and 5-vinylnorbornene are preferably used. Further, these polyolefin-based resins may be polymers graft-modified with a polar compound such as maleic acid or a silane compound. Among them, polymers or copolymers of α-olefins having 2 to 20 carbon atoms, preferably 2 to 10 carbon atoms are desirable.

The intrinsic viscosity [η] of such a polyolefin-based resin (C), which is measured in decalin at 135°C, is not particularly limited, and is preferably 0.5 dl/g or more and 5 dl/g or less. If the intrinsic viscosity [η] measured in decalin at 135°C becomes smaller, the mechanical strength of the thermoplastic elastomer composition decreases. If the intrinsic viscosity [η] becomes larger, moldability is deteriorated. When the intrinsic viscosity [η] of the polyolefin-based resin (C) is in the above-described range, it is possible to secure moldability while maintaining mechanical strength.

Preferred examples of such a polyolefin-based resin (C) include polyethylene, polypropylene and polybutene, and in particular, polypropylene-based resins that are polymers or copolymers having propylene as a main component are preferable from the viewpoint of improving the heat resistance and mechanical strength of the thermoplastic elastomer composition.

Examples of the polypropylene-based resin include propylene homopolymers, copolymers of propylene with ethylene and at least one monomer selected from α-olefins having 4 to 20 carbon atoms, impact copolymers (block polypropylene:bPP) synthesized by multistage polymerization and containing a rubber component containing a large number of ethylene-derived structural units. When the polypropylene-based resin is a copolymer, the content of propylene-derived structural units is preferably 90 mol% or more, more preferably 93 to 99 mol%.

The melting point of the polyolefin-based resin (C), which is measured by a differential scanning calorimeter (DSC), is preferably 100 to 200°C from the viewpoint of imparting heat resistance to the thermoplastic elastomer composition, and securing molding processability. The melting point is preferably 120 to 180°C, more preferably 140 to 170°C.

In the present invention, the melting point of the polyolefin-based resin (C) is measured by a method in which a sample is stored at 23°C for 72 hours, differential scanning calorimeter (DSC) measurement is then performed to prepare a DSC curve where the sample is cooled to -40°C and then heated to 200°C at a temperature rising rate of 10°C/min, and the peak temperature of the endothermic peak is analyzed with reference to JIS K 7121, and taken as a melting point Tm.

As the polyolefin-based resin (C) according to an aspect of the present invention, two or more polyolefin-based resins different in type and properties such as MFR may be used in combination.

### [Thermoplastic elastomer composition]

A thermoplastic elastomer composition according to an aspect of the present invention is a composition including the X/Y block copolymer (A) and the ethylene/α-olefin copolymer (B) described above, and may further include the polyolefin-based resin (C).

In a thermoplastic elastomer composition according to an aspect of the present invention, the content of the ethylene/α-olefin copolymer (B) is 1 to 400 parts by mass, preferably 10 to 350 parts by mass, more preferably 30 to 300 parts by mass, still more preferably 30 to 250 pars by mass per 100 parts by mass of the X/Y block copolymer (A). When the content of the ethylene/α-olefin copolymer (B) per 100 parts by mass of the X/Y block copolymer (A) is in the above-described range, the thermoplastic elastomer composition has balanced and excellent rubber elasticity exhibited by its softening effect and bleed-out resistance.

In a thermoplastic elastomer composition according to an aspect of the present invention, the content of the polyolefin-based resin (C) is 0 to 200 parts by mass, preferably 10 to 150 parts by mass, more preferably 15 to 100 parts by mass per 100 parts by mass of the X/Y block copolymer (A). It is preferable that the content of the polyolefin-based resin (C) per 100 parts by mass of the X/Y block copolymer (A) be in the above-described range because the thermoplastic elastomer composition has balanced and excellent heat resistance mechanical strength, molding processability and rubber elasticity.

A thermoplastic elastomer composition according to an aspect of the present invention may include components other than (A), (B) and (C) above as long as the purpose of the present invention is not hindered. Examples of the components that may be contained in the thermoplastic elastomer composition of the present invention include resin components other than (A), (B) and (C) above, weather-resistant stabilizers, heat-resistant stabilizers, antioxidants, ultraviolet absorbers, antistatic agents, slip inhibitors, anti-blocking agents, anti-fogging agents, nucleating agents, lubricants, pigments, dyes, anti-aging agents, hydrochloric acid absorbers, inorganic or organic fillers, organic or inorganic foaming agents, crosslinking agents, co-crosslinking agents, crosslinking aids, pressure sensitive adhesives, softeners and flame retardants.

The filler is preferably an inorganic filler, and examples thereof include powder fillers such as mica, carbon black, silica, calcium carbonate, talc, graphite, stainless steel and aluminum; and fibrous fillers such as glass fiber and metal fiber. It is preferable that an inorganic filler be contained because the tackiness of the thermoplastic elastomer composition is reduced. The content of a filler in a thermoplastic elastomer composition according to an aspect of the present invention is preferably 150 parts by mass or less, more preferably about 30 to 100 parts by mass per 100 parts by mass in total of (A), (B) and (C) above.

A thermoplastic elastomer composition according to an aspect of the present invention can be produced by kneading the components by a heretofore known method. The kneading can be performed after a mixing step is carried out, or without a mixing step. The mixing step may be carried out by mixing the components of the composition at a time or in sequence, and the mixing can be performed with, for example, a plastomill, a Henschel mixer, a V-blender, a ribbon blender, a tumbler blender, a kneader or a kneader-ruder. For the kneading, a method may be employed involving melt kneading using, for example, a single-screw extruder, a twinscrew extruder, a plastomill, a kneader, a kneader-ruder or a Banbury mixer, and then granulation, molding or grinding, for production. For the kneading, the components of the composition may be introduced into a kneading unit at a time or in sequence, and it is also possible to collectively introduce the mixture which has undergone the mixing step.

In addition, for example, a crosslinking agent such as organic peroxide and a crosslinking aid can be added as desired, or these necessary components can be mixed at a time, and melted and kneaded to perform partial crosslinking to the extent that thermoplasticity is not impaired. It is also possible to form a crosslinked product by adding, for example, a crosslinking agent such as an organic peroxide and crosslinking aid. It is preferable that a partially crosslinked product or a crosslinked product be generated because rubber elasticity at a high temperature is improved. Examples of the suitable crosslinking agent include organic peroxides, and specific examples thereof include 2,5-dimethyl-2,5-di(t-butylperoxy)-hexane; 2,5-dimethyl-2,5-di(benzoylperoxy)-hexane; t-butyl peroxybenzoate; dicumyl peroxide; t-butylcumyl peroxide; diisopropyl benzohydroperoxide; 1,3-bis-(t-butylperoxyisopropyl)-benzene; benzoyl peroxide; and 1,1-di(t-butylperoxy)-3,3,5-trimethylcyclohexane. Examples of the useful crosslinking aid include divinylbenzene, trimethylolpropane triacrylate, ethylene dimethacrylate, diallylphthalate, quinone dioxime, phenylenebismaleimide, polyethylene glycol dimethacrylate and unsaturated silane compounds. Any of these organic peroxides and crosslinking aids can be arbitrarily used in an amount of 0.1 to 5 parts by mass per 100 parts by mass of the thermoplastic elastomer composition to adjust the degree of crosslinking. It is also possible to use two or more of these organic peroxides and crosslinking aids in combination if necessary. When an unsaturated silane compound is used as the crosslinking aid, crosslinking can be made to further proceed by contact with moisture in the presence of a silanol condensation catalyst.

A thermoplastic elastomer composition according to an aspect of the present invention can be used for various applications without limitation, and can be suitably used for applications such as seal materials, packing materials, stoppers, automobile interior materials, damping materials, soundproof materials, dampers and daily commodities because of the excellent rubber elasticity.

### [Seal materials, automobile interior materials and damping materials]

A thermoplastic elastomer composition according to an aspect of the present invention can be appropriately molded by a heretofore known method and used as, for example, seal materials, automobile interior materials and damping materials. Examples of the molding method include injection molding, various kinds of extrusion, compression molding, calendering and vacuum forming. In addition, using a known chemical foaming agent or a known physical foaming agent such as carbon dioxide gas, nitrogen gas or water, the composition can be foamed by a known method during molding to form a foam.

The thermoplastic elastomer composition can be used in combination with a support composed of a hard resin or a metal. The hard resin is not particularly limited, and polyolefins such as polypropylene, polyethylene and polybutene, and engineering plastics such as polyamide, polycarbonate, polyethylene terephthalate, polyacetal, polyphenylene ether, polybutylene terephthalate, polysulfone and polyimide can be used. The metal is not particularly limited, and can be appropriately selected from, for example, a cold rolled steel sheet, a zinc-plated steel sheet, an aluminum/zinc alloy-plated sheet, a stainless steel sheet, an aluminum sheet, an aluminum alloy sheet, a magnesium sheet and a magnesium alloy sheet, and used. It is also possible to use injection-molded magnesium. Among the above-described supports, polypropylene is particularly excellent in adhesiveness to the thermoplastic elastomer composition, and particularly preferable.

As a method for combining the thermoplastic elastomer composition with a support, a heretofore known molding method such as injection molding or extrusion can be employed. Although there is no particular limitation, for example, a two-color injection molding method can be employed in which a hard resin for forming a support is melt-injection-molded in a mold, and a thermoplastic elastomer composition according to an aspect of the present invention is then melt-injection-molded to deposit the thermoplastic elastomer composition integrally on a surface of the hard resin molded material. Alternatively, an insert molding method can be employed in which first, a hard resin is melt-injection-molded in a mold, the molded material is then inserted into another mold, and on a surface thereof, a thermoplastic elastomer composition according to an aspect of the present invention is melt-injection-molded to deposit the thermoplastic elastomer composition integrally on a surface of the plastic molded material. Alternatively, a metallic support is inserted into a mold, and on a surface thereof, a thermoplastic elastomer composition according to an aspect of the present invention is melt-injection-molded to deposit the thermoplastic elastomer composition on a surface of the plastic molded material. Alternatively, two-color extrusion can be employed in which a support and a thermoplastic elastomer composition according to an aspect of the present invention is extruded in a multi-layered form at a time by a molding machine including a plurality of extruders. Alternatively, a molded article obtained from the thermoplastic elastomer composition can be fixed on a surface of a support using any of various adhesives. The molded article may be processed by a method such as punching before being fixed on the surface of the support.

### Examples

Hereinafter an aspect of the present invention will be described in detail with reference to Examples, but the present invention is not limited to these Examples. Raw material components used in Examples and Comparative Examples are as follows.

### [X/Y Block copolymer (A)]

In Examples and Comparative Examples below, the following commercially available X/Y block copolymers were used as X/Y block copolymers (A). The Mw of each X/Y block copolymer was measured by the same method as that for the Mw of the following ethylene/α-olefin copolymer.

A-1: Polystyrene-poly(ethylene/butene)-polystyrene block copolymer (SEBS), SEPTON 8004 manufactured by Kuraray Co., Ltd. (styrene content: 31 mass%, MFR (230°C, 2.16 kg): < 0.1 g/10 min, Mw: 110,000)
A-2: Polystyrene-poly(ethylene/ethylene/propylene)-polystyrene block copolymer (SEEPS), 4044 manufactured by Kuraray Co., Ltd. (styrene content: 32 mass%, MFR (230°C, 2.16 kg): not fluidized and unmeasurable, Mw: 160,000)

### [Ethylene/α-olefin copolymer (B)]

The methods for measuring various properties of the ethylene/α-olefin copolymer (B) are as follows.

### <Kinetic viscosity at 100°C and kinetic viscosity at 40°C>

The kinetic viscosity at 100°C (100°C kinetic viscosity) and the kinetic viscosity at 40°C (40°C kinetic viscosity) were measured and calculated by a method described in JIS K 2283.

### <Weight-average molecular weight (Mw) and molecular weight distribution (Mw/Mn)>

The molecular-average molecular weight (Mw) of and the molecular weight distribution (Mw/Mn) of the ethylene/α-olefin copolymer (B) were determined by the following high-performance GPC measurement apparatus.
High-performance GPC measurement apparatus: HLC8320GPC manufactured by TOSOH CORPORATION
Mobile phase: THF (manufactured by Wako Pure Chemical Industries, Ltd., stabilizer-free, liquid chromatography grade)
Columns: Two TSKgel Super Multipore HZ-M columns manufactured by TOSOH CORPORATION were connected in series
Sample concentration: 5 mg/mL
Mobile phase flow rate: 0.35 mL/min
Measurement temperature: 40°C
Standard sample for calibration curve: PStQuick MP-M manufactured by TOSOH CORPORATION

### <Ethylene content (mol%)>

The ethylene content of the ethylene/α-olefin copolymer (B) was measured using ECP500 nuclear magnetic resonance apparatus manufactured by JEOL Ltd. and using a mixed solvent of o-dichlorobenzene/deuterated benzene (80/20 vol%) as a solvent. The sample concentration was 55 mg/0.6 mL, the measurement temperature was 120°C, the observation nuclear was ¹³C (125 MHz), the sequence was single pulse proton decoupling, the pulse width was 4.7 µ/s (45° pulse), the repetition time was 5.5 seconds, the cumulative number was 10000 or more, and the reference for the determination of chemical shifts was 27.50 ppm.

The ethylene content of the ethylene/α-olefin copolymer (B) was determined from a ¹³C-NMR spectrum measured as described above, based on reports of "Kobunshi Bunseki Handbook (Polymer Analysis Handbook)" (published from Asakura Publishing Co., Ltd., pp.163-170), G. J. Ray (Macromolecules, 10, 773 (1977)), J. C. Randall (Macro-molecules, 15, 353 (1982)), and K. Kimura et al.(Polymer, 25, 4418 (1984)).

### [Production of ethylene/α-olefin copolymer (B)]

The methods for producing ethylene/α-olefin copolymers (B) used in Examples and Comparative Examples are shown below.

### [Production Example 1] Production of ethylene/propylene copolymer (B-1)

A 2 L volume continuous polymerization reactor equipped with a stirring blade and thoroughly purged with nitrogen was loaded with 1 L of dehydrated and purified hexane, a 96 mmol/L hexane solution of ethylaluminum sesquichloride (Al(C₂H₅)_{1.5}·Cl_{1.5}) was continuously supplied at a rate of 500 mL/h for 1 hour, and thereafter a 16 mmol/L hexane solution of VO(OC₂H₅)Cl₂ as a catalyst and hexane were continuously supplied at rates of 500 mL/h and 500 mL/h, respectively. On the other hand, the polymerization solution was continuously withdrawn from the top of the reactor so that the amount of the polymerization solution in the reactor was constant at 1 L.

Next, 27 L/h ethylene gas, 26 L/h propylene gas and 100 L/h hydrogen gas were supplied through bubbling tubes. The copolymerization reaction was carried out at 35°C while circulating a refrigerant through a jacket attached to the outside of the reactor. In this manner, a polymerization solution including an ethylene/propylene copolymer was obtained.

The polymerization solution obtained was washed with 500 mL of 0.2 mol/L hydrochloric acid with respect to 1 L of the polymerization solution three times and then with 500 mL of distilled water with respect to 1 L of the polymerization solution three times, and was dried over magnesium sulfate, and thereafter the solvent was distilled off under reduced pressure. The viscous liquid obtained was dried under reduced pressure at 130°C for 24 hours, and thus an ethylene/propylene copolymer (B-1) was obtained. The ethylene/propylene copolymer (B-1) had an ethylene content of 53.0 mol%, Mw of 2,700, Mw/Mn of 1.5, a 100°C kinematic viscosity of 40 mm²/s and a 40°C kinematic viscosity of 400 mm²/s.

### [Production Example 2] Production of ethylene/propylene copolymer (B-2)

A 2 L internal volume stainless steel autoclave thoroughly purged with nitrogen was loaded with 760 mL of heptane and 120 g of propylene, the temperature inside the system was raised to 150°C, and thereafter the total pressure was 3 MPa-G by supplying 0.85 MPa of hydrogen and 0.19 MPa of ethylene. Next, 0.4 mmol of triisobutylaluminum, 0.0002 mmol of [methylphenylmethylene(η⁵-cyclopentadienyl)(η⁵-2,7-di-tert-butylfluorenyl)]zirconium dichloride, and 0.002 mmol of N,N-dimethylanilinium tetrakis(pentafluorophenyl)borate were injected with nitrogen, and polymerization was initiated by stirring at a rotational speed of 400 rpm. Thereafter, only ethylene was continuously supplied to keep the total pressure at 3 MPa-G, and the polymerization was carried out at 150°C for 5 minutes. The polymerization was terminated by addition of a small amount of ethanol into the system, and thereafter unreacted ethylene, propylene and hydrogen were purged. The obtained polymerization solution was washed with 1000 mL of 0.2 mol/L hydrochloric acid three times and then with 1000 mL of distilled water three times, and dried over magnesium sulfate, thereafter the solvent was distilled off under reduced pressure, and thus a crude ethylene/propylene copolymer was obtained.

A 1 L internal volume stainless steel autoclave was loaded with 100 mL of a 0.5 mass% hexane solution of a Pd/alumina catalyst and 500 mL of a 30 mass% hexane solution of the crude ethylene/propylene copolymer obtained, and the autoclave was tightly closed and was purged with nitrogen. Next, the temperature was raised to 140°C under stirring, the inside of the system was purged with hydrogen, thereafter the pressure was increased to 1.5 MPa with hydrogen, and hydrogenation reaction was carried out for 15 minutes. The reaction liquid was subjected to filtration to separate a hydrogenation catalyst, thereafter the solvent was distilled off under reduced pressure, and the residue was dried at 80°C under reduced pressure for 24 hours to obtain an ethylene/propylene copolymer (B-2). The ethylene/propylene copolymer (B-2) had an ethylene content of 48.5 mol%, Mw of 5,200, Mw/Mn of 1.7, a 100°C kinematic viscosity of 152 mm²/s and a 40°C kinematic viscosity of 2,210 mm²/s.

### [Production Example 3] Production of ethylene/propylene copolymer (B-3)

A 2 L internal volume stainless steel autoclave thoroughly purged with nitrogen was loaded with 760 mL of heptane and 120 g of propylene, the temperature inside the system was raised to 150°C, and thereafter the total pressure was 3 MPa-G by supplying 0.85 MPa of hydrogen and 0.19 MPa of ethylene. Next, 0.4 mmol of triisobutylaluminum, 0.0002 mmol of [diphenylmethylene(η⁵-3-n-butylcyclopentadienyl)(η⁵-2,7-di-tert-butylfluorenyl)]zirconium dichloride, and 0.002 mmol of N,N-dimethylanilinium tetrakis(pentafluorophenyl)borate were injected with nitrogen, and polymerization was initiated by stirring at a rotational speed of 400 rpm. Thereafter, only ethylene was continuously supplied to keep the total pressure at 3 MPa-G, and the polymerization was carried out at 150°C for 5 minutes. The polymerization was terminated by addition of a small amount of ethanol into the system, and thereafter unreacted ethylene, propylene and hydrogen were purged. The obtained polymerization solution was washed with 1000 mL of 0.2 mol/L hydrochloric acid three times and then with 1000 mL of distilled water three times, dried over magnesium sulfate, and then the solvent was distilled off under reduced pressure. The obtained polymer was dried under reduced pressure at 80°C for 24 hours, and thus an ethylene/propylene copolymer (B-3) was obtained. The ethylene/propylene copolymer (B-3) had an ethylene content of 49.5 mol%, Mw of 5,100, Mw/Mn of 1.7, a 100°C kinematic viscosity of 150 mm²/s and a 40°C kinematic viscosity of 2,200 mm²/s.

### [Polyolefin-based resin (C)]

In Examples and Comparative Examples below, the following commercially available polyolefin resin was used as a polyolefin-based resin (C).
C-1: Homopolypropylene, Prime Polypro J105G manufactured by Prime Polymer Co., Ltd., (MFR (230°C, 2.16 kg): 9 g/10 min)

### [Other oils (D)]

In Comparative Examples below, the following commercially available oils were used.
D-1: Paraffin-based mineral oil, Diana Process Oil PW-90 manufactured by Idemitsu Kosan Co., Ltd.
D-2: Paraffin-based mineral oil, Diana Process Oil PW-380 manufactured by Idemitsu Kosan Co., Ltd.
D-3: Liquid paraffin, MORESCO-WHITE P-350P manufactured by MORESCO Corporation

### [Examples 1 to 12 and Comparative Examples 1 to 7]

The X/Y block copolymers (A-1) and (A-2), the ethylene/α-olefin copolymers (B-1) to (B-3), the polyolefin resin (C-1) and the other oils (D-1) to (D-3) were kneaded by a twin-screw extruder at a compounding ratio described in Table 1, and the extruded strand was cut to prepare pellets. The obtained pellets were dried at 80°C for 12 hours, a 2 mm-thick press sheet of 200 mm square was produced by a thermal compressor, and a specimen for testing properties was produced from the sheet.

Subsequently, properties of the composition were evaluated by the following methods.

### (1) Hardness

In accordance with JIS K 6253-3: 2012, three press sheets were stacked, and the type A durometer hardness was measured.

### (2) MFR

In accordance with JIS K 7210-1: 2014, measurement was performed under the conditions of 230°C and 2.16 kg using the pellets.

### (3) Compression set (CS)

In accordance with JIS K 6262: 2013, six circular sheets having a diameter of 29 mm and a thickness of 2 mm and prepared by punching the press sheet were stacked to obtain a specimen, which was compressed by 25%, and put in a thermostatic bath at 50°C or 70°C. After 24 hours, the specimen was taken out from the thermostatic bath, and the compression set was measured by Method A described in JIS.

### (4) Permanent elongation (PS)

In accordance with JIS K 6273: 2018, a JIS Dumbbell shape No. 3 specimen prepared by punching the press sheet were elongated by 20% or 100%, and put in a thermostatic bath at 50°C or 70°C. After 24 hours, the specimen was taken out from the thermostatic bath, and the constant elongation tensile permanent set was measured by Method A described in JIS.

Measurement results are shown in Tables 1 to 5.

**[Table 1]**

| | | | Example 1 | Example 2 | Example 3 | Example 4 | Example 5 |
|---|---|---|---|---|---|---|---|
| Formulation (part by mass) | A-1 | phr | 100 | 100 | 100 | 100 | 100 |
| | A-2 | phr | | | | | |
| | B-1 | phr | 100 | 85 | 100 | | |
| | B-2 | phr | | | | 100 | 85 |
| | B-3 | phr | | | | | |
| | C-1 | phr | 50 | 50 | 57.5 | 50 | 50 |
| | D-1 | phr | | | | | |
| | D-2 | phr | | | | | |
| | D-3 | phr | | | | | |
| Evaluation | Hardness | - | 80 | 84 | 85 | 59 | 85 |
| | MFR | g/10 min | 24 | 18 | 27 | 13 | 9 |
| | CS (50°C) | % | 39 | 40 | 40 | 34 | 38 |
| | CS (70°C) | % | 75 | 72 | 75 | 84 | 82 |
| | PS (50°C, 20% elongation) | % | 40 | 42 | 43 | 34 | 38 |
| | PS(70°C, 20% elongation) | % | 80 | 59 | 61 | 54 | 52 |
| | PS (70°C, 100% elongation) | % | - | - | - | - | - |

**[Table 2]**

| | | | Example 8 | Example 7 | Comparative Example 1 | Comparative Example 2 | Comparative Example 3 |
|---|---|---|---|---|---|---|---|
| Formulation (part by mass) | A-1 | phr | 100 | 100 | 100 | 100 | 100 |
| | A-2 | phr | | | | | |
| | B-1 | phr | | | | | |
| | B-2 | phr | 100 | | | | |
| | B-3 | phr | | 100 | | | |
| | C-1 | phr | 57.5 | 50 | 50 | 50 | 50 |
| | D-1 | phr | | | 100 | | |
| | D-2 | phr | | | | 100 | |
| | D-3 | phr | | | | | 100 |
| Evaluation | Hardness | - | 85 | 80 | 85 | 84 | 85 |
| | MFR | g/10 min | 15 | 14 | 38 | 21 | 41 |
| | CS (50°C) | % | 39 | 33 | 80 | 41 | 85 |
| | CS (70°C) | % | 84 | 82 | 99 | 84 | 99 |
| | PS (50°C, 20% elongation) | % | 38 | 34 | 57 | 47 | 72 |
| | PS(70°C, 20% elongation) | % | 53 | 51 | 91 | 72 | 82 |
| | PS (70°C, 100% elongation) | % | - | - | - | - | - |

As shown in Tables 1 and 2, specimens were formulated to have a hardness of about 59 to 65, evaluation was performed, and the results showed that in Examples 1 to 7 using the ethylene/α-olefin copolymer (B), property values representing sag resistance such as compression set and permanent elongation were lower as compared to Comparative Examples 1 to 3 using (D-1) to (D-3) instead of the copolymer (B), and excellent sag resistance was exhibited.

**[Table 3]**

| | | | Example 8 | Example 9 | Comparative Example 4 | Comparative Example 5 |
|---|---|---|---|---|---|---|
| Formulation (part by mass) | A-1 | phr | 100 | 100 | 100 | 100 |
| | A-2 | phr | | | | |
| | B-1 | phr | 150 | 100 | | |
| | B-2 | phr | | | | |
| | B-3 | phr | | | | |
| | C-1 | phr | 50 | 25 | 50 | 25 |
| | D-1 | phr | | | | |
| | D-2 | phr | | | 150 | 100 |
| | D-3 | phr | | | | |
| Evaluation | Hardness | - | 48 | 39 | 50 | 42 |
| | MFR | g/10 min | 114 | 19 | 80 | 23 |
| | CS (50°C) | % | 42 | 37 | 48 | 42 |
| | CS (70°C) | % | 80 | 72 | 91 | 82 |
| | PS (50°C, 20% elongation) | % | 40 | 40 | 54 | 51 |
| | PS(70°C, 20% elongation) | % | 70 | 69 | 79 | 80 |
| | PS (70°C, 100% elongation) | % | - | - | - | - |

As shown in Table 3, specimens were formulated to have a hardness of about 39 to 50, evaluation was performed, and the results showed that in Examples 8 and 9 using the ethylene/α-olefin copolymer (B), property values representing sag resistance such as compression set and permanent elongation were lower as compared to Comparative Examples 4 and 5 using (D-2) instead of the copolymer (B), and excellent sag resistance was exhibited.

**[Table 4]**

| | | | Example 10 | Comparative Example 6 |
|---|---|---|---|---|
| Formulation (part by mass) | A-1 | phr | 100 | 100 |
| | A-2 | phr | | |
| | B-1 | phr | 100 | |
| | B-2 | phr | | |
| | B-3 | phr | | |
| | C-1 | phr | 75 | 75 |
| | D-1 | phr | | |
| | D-2 | phr | | 100 |
| | D-3 | phr | | |
| Evaluation | Hardness | - | 75 | 77 |
| | MFR | g/10 min | 27 | 23 |
| | CS (50°C) | % | 48 | 45 |
| | CS (70°C) | % | 77 | 84 |
| | PS (50°C, 20% elongation) | % | 53 | 58 |
| | PS(70°C, 20% elongation) | % | 75 | 84 |
| | PS (70°C, 100% elongation) | % | - | - |

As shown in Table 4, specimens were formulated to have a hardness of about 75 to 77, evaluation was performed, and the results showed that in Example 10 using the ethylene/α-olefin copolymer (B), property values representing sag resistance such as compression set and permanent elongation were lower as compared to Comparative Example 6 using (D-2) instead of the copolymer (B), and excellent sag resistance was exhibited.

**[Table 5]**

| | | | Example 11 | Example 12 | Comparative Example 7 |
|---|---|---|---|---|---|
| Formulation (part by mass) | A-1 | phr | | | |
| | A-2 | phr | 100 | 100 | 100 |
| | B-1 | phr | 100 | | |
| | B-2 | phr | | | |
| | B-3 | phr | | 100 | |
| | C-1 | phr | 50 | 50 | 50 |
| | D-1 | phr | | | 100 |
| | D-2 | phr | | | |
| | D-3 | phr | | | |
| Evaluation | Hardness | - | 82 | 63 | 85 |
| | MFR | g/10 min | 0.4 | 0.4 | 0.8 |
| | CS (50°C) | % | - | - | - |
| | CS (70°C) | % | 38 | 30 | 50 |
| | PS (50°C, 20% elongation) | % | - | - | - |
| | PS(70°C, 20% elongation) | % | 42 | 38 | 51 |
| | PS (70°C, 100% elongation) | % | 39 | 33 | Cut and unmeasurable |

As shown in Table 5, specimens were formulated to have a hardness of about 62 to 65 with (A-2) used as the X/Y block copolymer (A) instead of (A-1), evaluation was performed, and the results showed that in Examples 11 and 12 using the ethylene/α-olefin copolymer (B), property values representing sag resistance such as compression set and permanent elongation were lower as compared to Comparative Example 7 using (D-1) instead of the copolymer (B), and excellent sag resistance was exhibited.

## Claims

1. A thermoplastic elastomer composition comprising:
100 parts by mass of a block copolymer comprising a polymer block (X) having an aromatic vinyl compound as a main component and a polymer block (Y) having a conjugated diene compound as a main component, or a hydrogenated product thereof (A);
1 to 400 parts by mass of an ethylene/α-olefin copolymer (B) satisfying the following requirements (b-1) to (b-3); and
0 to 200 parts by mass of a polyolefin-based resin (C) satisfying the following requirement (c-1),
(b-1) a kinematic viscosity at 100°C is 5 to 5,000 mm²/s and a kinematic viscosity at 40°C is 50 to 100,000 mm²/s,
(b-2) a weight-average molecular weight (Mw) determined by gel permeation chromatography (GPC) is 1,000 to 30,000,
(b-3) a content ratio of ethylene structural units is 15 to 85 mol%, and
(c-1) MFR (230°C and 2.16 kg) is 0.1 to 500 g/10 min.

2. The thermoplastic elastomer composition according to claim 1, wherein the block copolymer or hydrogenated product thereof (A) is a hydrogenated product of a block copolymer comprising a polymer block (X) having an aromatic vinyl compound as a main component and a polymer block (Y) having a conjugated diene compound as a main component, and
a content of the ethylene/α-olefin copolymer (B) is 30 to 300 parts by mass and a content of the polyolefin-based resin (C) is 10 to 150 parts by mass per 100 parts by mass of the hydrogenated product of the block copolymer.

3. The thermoplastic elastomer composition according to claim 1 or 2, wherein the kinematic viscosity at 100°C is 30 to 300 mm²/s and the kinematic viscosity at 40°C is 300 to 4,000 mm²/s in the requirement (b-1),
the weight-average molecular weight (Mw) determined by gel permeation chromatography (GPC) is 2,000 to 7,000 in the requirement (b-2), and
the content ratio of ethylene structural units is 40 to 60 mol% in the requirement (b-3).

4. The thermoplastic elastomer composition according to any one of claims 1 to 3, wherein the polymer block (X) is a polymer block having styrene as a main component, the polymer block (Y) is a copolymer block having butadiene and isoprene as main components, and the block copolymer or hydrogenated product thereof (A) is a hydrogenated product of the block copolymer.

5. A seal material comprising the thermoplastic elastomer composition according to any one of claims 1 to 4.

6. An automobile interior material comprising the thermoplastic elastomer composition according to any one of claims 1 to 4.

7. A damping material comprising the thermoplastic elastomer composition according to any one of claims 1 to 4.

8. A method for producing a thermoplastic elastomer composition, comprising a step of mixing:
100 parts by mass of a block copolymer comprising a polymer block (X) having an aromatic vinyl compound as a main component and a polymer block (Y) having a conjugated diene compound as a main component, or a hydrogenated product thereof (A);
1 to 400 parts by mass of an ethylene/α-olefin copolymer (B) produced by the following method (a) and satisfying the following requirements (b-1) to (b-3); and
0 to 200 parts by mass of a polyolefin-based resin (C) satisfying the following requirement (c-1),
(b-1) a kinematic viscosity at 100°C is 5 to 5,000 mm²/s and a kinematic viscosity at 40°C is 50 to 100,000 mm²/s,
(b-2) a weight-average molecular weight (Mw) determined by gel permeation chromatography (GPC) is 1,000 to 30,000, and
(b-3) a content ratio of ethylene structural units is 15 to 85 mol%,
(c-1) MFR (230°C and 2.16 kg) is 0.1 to 500 g/10 min, and
the method (α): a method comprising a step of polymerizing ethylene and an α-olefin by solution polymerization in the presence of a catalyst system comprising:
a bridged metallocene compound (P-1) represented by the following formula [1], and
at least one compound (Q) selected from the group consisting of an organometal compound (Q-1), an organoaluminum oxy compound (Q-2) and a compound (Q-3) that reacts with the bridged metallocene compound (P-1) to form an ion pair: 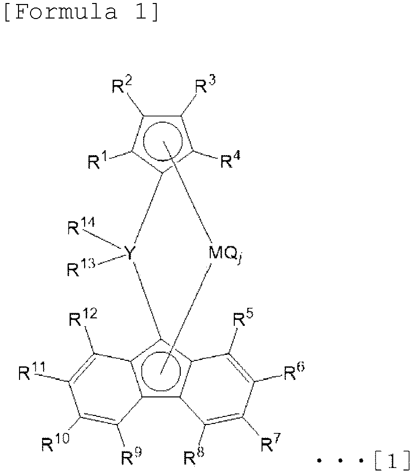
[in the formula [1], R¹, R², R³, R⁴, R⁵, R⁸, R⁹ and R¹² are each independently a hydrogen atom, a hydrocarbon group, or a silicon-containing hydrocarbon group, and a plurality of adjacent groups are optionally linked to each other to form a ring structure;
R⁶ and R¹¹ are the same group and are a hydrogen atom, a hydrocarbon group, or a silicon-containing hydrocarbon group;
R⁷ and R¹⁰ are the same group and are a hydrogen atom, a hydrocarbon group, or a silicon-containing hydrocarbon group;
R⁶ and R⁷ are optionally bonded to a hydrocarbon having 2 to 3 carbon atoms to form a ring structure;
R¹⁰ and R¹¹ are optionally bonded to a hydrocarbon having 2 to 3 carbon atoms to form a ring structure;
R⁶, R⁷, R¹⁰, and R¹¹ are not hydrogen atoms at the same time;
Y is a carbon atom or a silicon atom;
R¹³ and R¹⁴ are each independently a hydrogen atom, a hydrocarbon group, or a silicon-containing hydrocarbon group, and are optionally linked to each other to form a ring structure;
M is Ti, Zr, or Hf;
Q is independently a halogen atom, a hydrocarbon group, an anionic ligand, or a neutral ligand capable of coordinating to a lone pair of electrons; and
j is an integer of 1 to 4].

9. The production method according to claim 8, wherein in the formula [1], one or both of R¹³ and R¹⁴ are aryl groups.

10. The production method according to claim 8 or 9, wherein in the formula [1], both R¹³ and R¹⁴ are aryl groups, and one of R² and R³ is a saturated hydrocarbon group having 4 carbon atoms.

11. The production method according to any one of claims 8 to 10, wherein the polymer block (X) is a polymer block having styrene as a main component, the polymer block (Y) is a copolymer block having butadiene and isoprene as main components, and the block copolymer or hydrogenated product thereof (A) is a hydrogenated product of the block copolymer.
